# EUROPEAN PATENT APPLICATION

(11) **EP 4 783 098 A1**
(43) Date of publication of application: **29.07.2026**
(21) Application number: 26150045.8
(22) Date of filing: 02.01.2026
(51) Int. Cl.: G06Q 30/015, B64D 45/00, G06Q 30/02, G06Q 50/40, G06V 20/59

(54) **APPARATUSES, COMPUTER-IMPLEMENTED METHODS, AND COMPUTER PROGRAM PRODUCTS FOR PASSENGER COMPLIANCE MANAGEMENT**

(30) Priority: 24.01.2025 IN 202511005953; 28.04.2025 US 202519191484
(71) Applicant: Honeywell International Inc., Charlotte, NC 28202 (US)
(72) Inventor: SHRIVASTAVA, Raunak, Charlotte, 28202 (US); CHUNDURI, Anil Kumar, Charlotte, 28202 (US); AVERKOVA, Dariia, Charlotte, 28202 (US)
(74) Representative: Haseltine Lake Kempner LLP

(57) **Abstract**

Embodiments of the disclosure provide for improving operating procedure compliance management. In the context of a method, the method includes receiving a video feed of passengers boarding a vehicle; executing facial recognition with respect to captured frames of the video feed to identify passengers; associating the identified passengers with vehicle seats based on a set of assigned location information; obtaining passenger data for the vehicle from sensors for corresponding passengers; determining whether the passenger data satisfies an adherence condition stored in a data store; identifying sensor which does not comply with the adherence condition and a corresponding passenger associated with the sensor based on the set of assigned location information; and transmitting a subject frame of the received video feed depicting the corresponding passenger associated with the at least one sensor.

## Description

### TECHNOLOGICAL FIELD

Embodiments of the present disclosure are generally directed to providing passenger assistance and direction and ensuring passenger compliance with required conditions for vehicle motion.

### BACKGROUND

Typical approaches to passenger assistance and compliance rely upon human operators. For example, in an aerial context, human flight attendants carry out passenger assistance duties, such as alerting passengers as to precautionary and emergency measures. Further, human flight attendants may be responsible for ensuring that passengers comply with conditions required to allow a vehicle to commence motion. However, vehicles may lack means for accommodating human crew members dedicated to fulfilling such tasks. For example, vehicles may be staffed by a single human pilot with limited or no bandwidth to inherit and perform passenger assistance and compliance duties, especially in emergency scenarios. As another example, vehicles may be automatically or remotely operated and, therefore, lack onboard crewmembers for performing passenger assistance. As a result, passenger safety and comfort may be compromised.

Applicant has discovered various technical problems associated with providing assistance to vehicle passengers. Through applied effort, ingenuity, and innovation, Applicant has solved many of these identified problems by developing the embodiments of the present disclosure, which are described in detail below.

### BRIEF SUMMARY

In accordance with a first aspect of the disclosure, a computer-implemented method for improved operational procedure compliance is provided. The computer-implemented method is executable utilizing any of a myriad of computing device(s) and/or combinations of hardware, software, firmware. In some example embodiments an example computer-implemented method includes receiving a video feed of passengers boarding a vehicle; executing facial recognition with respect to captured frames of the received video feed to identify passengers; associating the identified passengers with vehicle seats based on a set of assigned location information; obtaining passenger data for a vehicle from sensors for corresponding passengers, wherein the passenger data indicates current state information corresponding to the one or more sensors; determining whether the passenger data satisfies an adherence condition stored in a data store; identifying at least one sensor which does not comply with the adherence condition and a corresponding passenger associated with the at least one sensor based on the set of assigned location information; and transmitting a subject frame of the one or more captured frames of the received video feed to one or more vehicle staff, wherein the subject frame of the one or more captured frames depicts the corresponding passenger associated with the at least one sensor.

In some embodiments, transmitting instructions for the corresponding passenger further comprises displaying, via a passenger display subsystem corresponding to the identified at least one sensor, the instructions for the corresponding passenger.

In some embodiments, transmitting instructions for the passenger further comprises delivering an aural alert to a system associated with the corresponding passenger.

In some embodiments, the method further includes generating current compliance data based on the obtained passenger data and the at least one adherence condition. The method may additionally include transmitting the current compliance data to a ground operator.

In some embodiments, the method further includes generating a compliance checklist based, at least in part, on the identified at least one sensor of the first subset of sensors which does not comply with the at least one adherence condition, wherein the compliance checklist includes one or more actions to be completed to meet the at least one adherence condition. In some embodiments, the method further includes detecting one or more incomplete actions corresponding to the compliance checklist. The method may additionally include blocking one or more vehicle actions responsive to detecting the one or more incomplete actions.

In some embodiments, the method further includes determining a boarding status corresponding to one or more passengers based, at least in part, on the obtained passenger data and a corresponding video feed.

In some embodiments, the method further includes presenting one or more interaction options, via a passenger system, enabling a passenger to submit one or more free-text messages to an offboard staff member.

In some embodiments, the method further includes receiving a compliance query from a passenger of the vehicle, generating an automated response to the compliance query, and transmitting the automated response to a corresponding passenger system.

In some embodiments, the method further includes generating one or more textual descriptions corresponding to the video feed and transmitting the one or more textual descriptions to the one or more vehicle staff.
In some embodiments, the method further includes detecting a passenger emergency based at least in part on the at least one sensor which does not comply with the at least one adherence condition or a received passenger communication and, responsive to detecting the passenger emergency, automatically diverting the vehicle to an emergency location.

In accordance with another aspect of the present disclosure, a computing apparatus for improved operating procedure compliance is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein.

In accordance with another aspect of the present disclosure, a computer program product for improved operating procedure compliance is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a network environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example onboard system architecture in accordance with at least some example embodiments of the present disclosure.
FIG. 4 illustrates an example ground operator system 400 for monitoring and managing passenger compliance in accordance with at least some embodiments of the present invention.
FIG. 5 illustrates an example data architecture in accordance with at least some example embodiments of the present disclosure.
FIG. 6 illustrates an example workflow for managing condition compliance in accordance with at least some example embodiments of the present disclosure.
FIG. 7 illustrates a block diagram of a compliance system in accordance with at least some example embodiments of the present disclosure.
FIG. 8 depicts one example of a passenger status human machine interface in accordance with at least some example embodiments of the present invention.
FIG. 9 illustrates a flowchart depicting operations of an example process for providing compliance verification in accordance with at least some example embodiments of the present disclosure.
FIG. 10 illustrates a flowchart depicting operations of an example process for determining sensor state compliance in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

In the context of Urban Air Mobility, it may be beneficial to simplify aircraft operations to enable a single pilot to fly eVTOL aircrafts. In UAM aircrafts, there may be limited, or in some cases zero, crew members inside the cabin to manage the passengers, cater to their requirements, ensure their safety, and handle emergency situations. Passengers may not adhere to standard operating procedures of boarding, deboarding, and otherwise conducting themselves on a vehicle on their own. Further, they may not understand or properly follow instructions given by a pilot (such as fastening a seatbelt, remaining seated at their designated seat, and the like). Further, a ground operator may not have sufficient time and resources to immediately respond to queries of pilots and passengers of an aircraft fleet simultaneously.

Embodiments of the present disclosure provide a myriad of technical advantages in the technical field of automated vehicle compliance management. Typically, passenger assistance and compliance are provided by one or more human crewmembers. For example, a vehicle may be staffed with attendants responsible for explaining safety information to passengers and directing passengers through safety precaution and emergency measures, and ensuring that passengers comply with conditions corresponding to requirements for vehicle motion. However, some vehicles may lack capacity to accommodate dedicated human staff for assuming such responsibilities. Accordingly, existing approaches may allocate passenger guidance to an operator of the vehicle. Vehicle operators may lack bandwidth to both assist and monitor passengers and safely monitor and control the vehicle. As a result, the workload of the operator may become excessive, potentially reducing quality and scope of passenger assistance and safety of vehicle operation. Additionally, some vehicles may be pilotless or remotely piloted such that passenger assistance tasks cannot be assumed by a vehicle operator.

Embodiments of the present disclosure overcome the technical challenges of providing passenger assistance and ensuring passenger compliance by monitoring vehicle sensors and corresponding vehicle data for satisfaction of one or more conditions and causing output of media elements to a passenger portion of a vehicle and/or a compliance monitoring system, either local to the vehicle or a control system located separately from the vehicle. For example, the present methods, apparatuses, and computer program products may obtain vehicle data (e.g., vehicle statuses, operator commands, and/or the like) from one or more sources including onboard systems and sensors, external systems, operator computing devices, passenger computing devices, and/or the like. The methods, apparatuses, and computer program products may determine whether the vehicle data satisfies respective criteria for one or more conditions. In this manner, observational workloads may be offloaded away from the vehicle operator. Further, whereas a human assistant may be limited to responding to a single condition, the methods, apparatuses, and computer program products may detect and respond to multiple different conditions simultaneously, thereby providing an increase to passenger assistance and compliance throughput and specificity. The present methods, apparatuses, and computer program products may further be used in combination with one or more crewmembers and/or vehicle operators to limit the actions required by such actors. For example, the methods, apparatuses, and computer program products may provide compliance monitoring and reporting such that crew members and/or operators are responsible for taking action responsive to a lack of compliance for example, rather than also being responsible for the tasks associated with determining and/or monitoring compliance.

In various embodiments, the methods, apparatuses, and computer program products are configured to respond to conditions on a priority basis. For example, output of respective media elements for co-occurring conditions may be performed based at least in part on respective categories of the conditions. The methods, apparatuses, and computer program products may prioritize the output of media elements for emergency-related conditions over output of media elements for precaution- or entertainment-related conditions. In doing so, the method, apparatus, and computer program product may prioritize mitigation of hazards most critical to passenger safety. Further, by automating passenger assistance and condition compliance measures, the present techniques may overcome disadvantages of reducing or eliminating onboard vehicle crews.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Media element" refers to any visual, auditory, or tactile effect that may be provided to a human subject to instruct or inform the human subject. For example, a media element may include program files associated with processing, storing, and outputting audible sounds, images, videos, animations, haptics, and/or the like.

### Example Systems and Apparatuses of the Disclosure

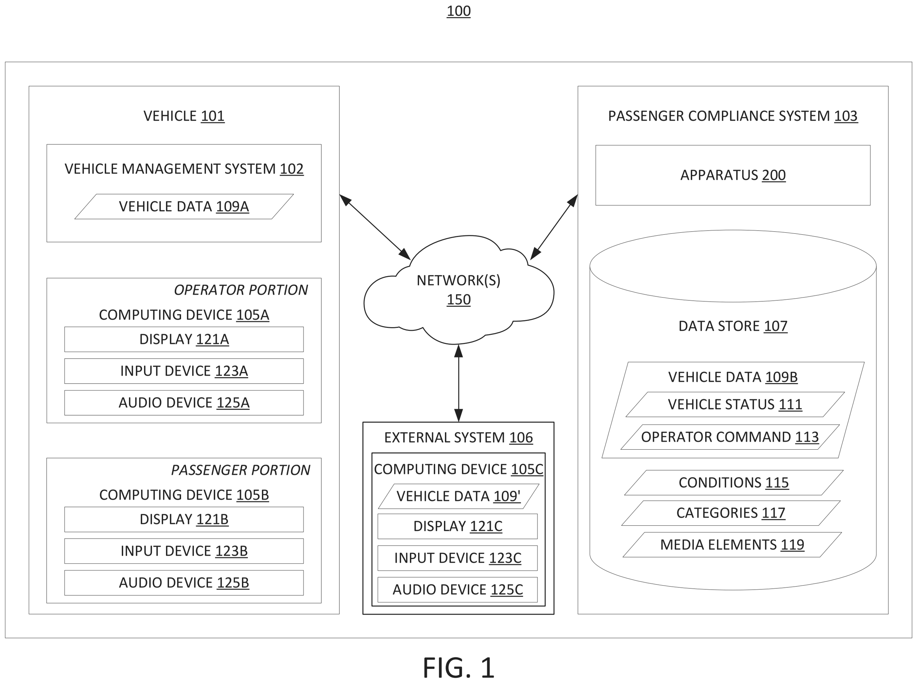

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, a passenger compliance system 103, and, optionally, one or more external systems 106. In some embodiments, the passenger compliance system 103 is external to the vehicle 101. For example, the passenger compliance system 103 may include a remote computing environment in communication with the vehicle 101. In some embodiments, the vehicle 101 comprises all or a portion of the passenger compliance system 103.

In various embodiments the passenger compliance system 103 is configured to supplement human passenger assistants and reduce operator workload in managing passenger portions of a vehicle 101. In doing so, the passenger compliance system 103 may support single pilot operation (SPO) and simplified vehicle operation (SVO). In some embodiments, the passenger compliance system 103 is configured to output guidance and information to passengers on a conditional basis with priority ranks. In this manner, the passenger compliance system 103 may transition between providing passengers with entertainment-related information, precautionary guidance, and safety-critical instructions.

In some embodiments, the vehicle 101 includes an operator portion configured to accommodate one or more operators and which is separated from a passenger portion by spacing and/or vehicle infrastructure (e.g., doors, windows, walls, and/or the like). For example, the vehicle 101 may include a cockpit, wheelhouse, helm, and/or the like. In some embodiments, the operator portion includes one or more computing devices 105A by which vehicle data 109A may be received and provisioned to the passenger compliance system 103. For example, the computing device 105A may be configured to receive user inputs that define vehicle statuses 111, operator commands 113, and/or the like. The passenger compliance system 103 may be configured to receive the vehicle statuses 111, operator commands 113, and/or the like from the computing device 105A and carry out functionality described herein to automatically provide passenger assistance based at least in part on one or more conditions 115 that are determined to be satisfied.

In some embodiments, the computing device 105A includes one or more displays 121A on which graphical user interfaces (GUIs) and other information related to vehicle operation, passenger assistance, passenger compliance and/or the like, may be rendered. In some embodiments, the display 121A includes a CRT (cathode ray tube), LCD (liquid crystal display) monitor, LED (light-emitting diode) monitor, and/or the like, for displaying information/data to an operator of a vehicle 101. In some embodiments, the computing device 105A includes one or more input devices 123A for receiving user inputs. For example, the input device 123A may receive operator commands associated with conditions 115. The input device 123A may include any number of devices that enable human-machine interface (HMI) between an operator of the vehicle and the passenger compliance system 103. In some embodiments, the input device 123A includes one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input device 123A includes one or more vehicle controls (e.g., joysticks, thumbsticks, yokes, steering wheels, accelerator control, thrust control, brake control, and/or the like) that enable an operator to control and navigate the vehicle 101.

In some embodiments, the computing device 105A includes one or more audio devices 125A configured to receive and record audio within the operator portion of the vehicle 101. For example, the audio device 125A may be configured to record utterances of an operator of the vehicle 101. In such contexts, the audio device 125A, passenger compliance system 103, and/or the like may process the recorded utterances via one or more natural language modules to generate one or more vehicle statuses 111, operator commands 113, and/or the like. Additionally, or alternatively, in some embodiments, the audio device 125A is configured to output audible media elements 119 to the operator of the vehicle 101. For example, the audio device 125A may output audio media elements 119 that are indicative of activities of the passenger compliance system 103, such as indications of conditions determined to be satisfied, priority rankings of conditions, media elements being outputted to a passenger portion of the vehicle 101, and/or the like.

In various embodiments, the vehicle 101 includes a passenger portion configured to accommodate one or more passengers. For example, the vehicle 101 may include a seating area, cabin, deck, and/or the like that is allocated for holding passengers. In some embodiments, the passenger portion includes one or more computing devices 105B configured to output media elements 119 to one or more passengers. In some embodiments, the computing devices 105A, 105B may be handheld devices, seat-mounted devices, wall-mounted devices, ceiling-mounted devices, window-mounted devices, passenger or operator wearable devices, and/or the like. In various embodiments, a computing device 105B or computing device 105A include mobile devices, smartphones, tablets, phablets, kiosks, smart displays, speakers, Internet of Things (IoT) devices, smart appliances, and/or the like.

The vehicle 101 may include multiple different computing devices 105B configured to provide various formats of media elements 119, such as audible media, visual media, tactile media, and/or the like. In some embodiments, the computing device 105B is configured to receive media elements 119 from the passenger compliance system 103. For example, the computing device 105B may receive images, videos, audio, haptics instructions, and/or the like from the passenger compliance system 103 for outputting to passengers.

In some embodiments, the computing device 105B includes one or more displays 121B on which GUIs and other information related to passenger assistance may be rendered. In some embodiments, the display 121B includes a CRT, LCD monitor, LED monitor, and/or the like, for displaying information/data to vehicle passengers. In some embodiments, the passenger portion includes a plurality of computing devices 105B comprising displays 121B such that visual media may be outputted to all or a subset of passengers in the passenger portion (e.g., individual seats, seat rows, seat columns, and/or the like). In various embodiments, the computing device 105B includes one or more audio devices 125B configured to output audible media elements to passengers. For example, the audio device 125B may include one or more speakers by which audio may be outputted to the passenger portion of the vehicle or subsets of the passenger portion, such as individual seats, seat rows, seat columns, and/or the like.

In some embodiments, the computing device 105B optionally includes one or more input devices 123B for receiving user inputs. For example, the input device 123A may receive user inputs for requesting passenger assistance (e.g., entertainment guidance, precautionary safety information, emergency assistance, and/or the like). The input device 123B may include any number of devices that enable HMI between a passenger and the passenger compliance system 103. In some embodiments, the input device 123B includes one or more buttons, cursor devices, joysticks, touch screens, including three-dimensional or pressure-based touch screens, camera, finger-print scanners, accelerometer, retinal scanner, gyroscope, magnetometer, or other input devices. For example, the input device 123B may include a touchscreen by which a passenger may provide user inputs for requesting assistance from the passenger compliance system 103.

In some embodiments, the vehicle 101 includes a vehicle management system 102 configured to generate or obtain vehicle data 109A, 109' that is indicative of operation of the vehicle 101. Additionality, in some embodiments, the vehicle management system 102 is configured to control the vehicle 101. The vehicle management system 102 may include any number of computing device(s) and/or other system(s) embodied in hardware, software, firmware, and/or the like. For example, the vehicle management system 102 may include one or more vehicle controls (e.g., rotor speed, rotor orientation, thrust, brakes, flaps, and/or the like). In some embodiments, the vehicle management system 102 includes an autopilot and/or the like that automatically controls the vehicle 101. The autopilot may be embodied in firmware, software, hardware, and/or the like such that the vehicle management system 102 may autonomously navigate the vehicle 101. Additionally, or alternatively, in some embodiments, the vehicle management system 102 is configured to execute control commands received from a remote computing environment, such as a ground station.

In some embodiments, the vehicle management system 102 includes one or more vehicle recording systems configured to obtain and report one or more aspects of the vehicle or operation thereof. For example, the vehicle management system 102 may include a transponder, data uplink system, traffic collision avoidance system (TCAS), automatic dependent surveillance-broadcast (ADS-B), flight recorder, and/or the like. In some embodiments, the vehicle management system 102 is configured to receive vehicle data 109' from one or more external systems. In some embodiments, the vehicle management system 102 includes or is in communication with one or more sensors of the vehicle 101. For example, the vehicle management system 102 may include or communicate with image sensors, pressure sensors, temperature sensors, audio sensors, accelerometers, gyroscopes, magnetometers, inertial measurement units, and/or the like. In various embodiments, the vehicle management system 102 includes one or more sensors, systems, and/or the like configured to determine a physical position of the vehicle 101. For example, the vehicle management system 102 may include one or more satellite-based positioning systems configured to generate a geographic orientation of a vehicle, such as a GPS module.

In some embodiments, the vehicle management system 102 is configured to obtain images, videos, audio recordings, and/or the like of the passenger portion, the operator portion, and/or the like. In various embodiments, the vehicle management system 102 is configured to provision vehicle data 109A comprising images, videos, audio recordings, and/or the like to the passenger compliance system 103. In this manner, the passenger compliance system 103 may determine whether one or more conditions 115 are satisfied based at least in part on the images, videos, audio recordings, and/or the like.

In various embodiments, the external system 106 includes any system that is external to the vehicle 101 and configured to generate vehicle data 109' indicative of operation of the vehicle 101. For example, the external system 106 may include radar systems, weather alert systems, vehicle traffic systems, ground stations, other vehicles 101, and/or the like, that are located outside of the vehicle 101. In some embodiments, the external system 106 is configured to provision vehicle data 109' to the passenger control system 103, vehicle management system 102, computing device 105A, computing device 105B, and/or the like. For example, the external system 106 may provision weather reports, vehicle traffic reports, location-specific tourism information, and/or the like to the passenger control system 103.

In some embodiments, the external system includes one or more computing devices 105C by which vehicle data 109' provided to the vehicle 101. For example, the computing device 105C may be configured to receive user inputs that define vehicle statuses 111, operator commands 113, and/or the like. In some embodiments, the computing device 105C includes one or more displays 121C on which graphical user interfaces (GUIs) and other information related to vehicle operation, passenger assistance, passenger compliance and/or the like, may be rendered. In some embodiments, the display 121C includes a CRT (cathode ray tube), LCD (liquid crystal display) monitor, LED (light-emitting diode) monitor, and/or the like, for displaying information/data to an offboard crew member. In some embodiments, the computing device 105C includes one or more input devices 123C for receiving user inputs. For example, the input device 123C may receive operator commands associated with conditions 115. The input device 123C may include any number of devices that enable human-machine interface (HMI) between the offboard crew member and the passenger compliance system 103. In some embodiments, the input device 123C includes one or more buttons, cursor devices, joysticks, touch screens, including three-dimensional or pressure-based touch screens, camera, finger-print scanners, accelerometer, retinal scanner, gyroscope, magnetometer, or other input devices. In various embodiments, the computing device 105C includes one or more audio devices 125C configured to output audible media elements to the offboard crew member. For example, the audio device 125C may include one or more speakers by which audio may be outputted to the offboard crew member.

In some embodiments, the passenger compliance system 103 includes an apparatus 200 configured to perform various functions and actions related to enacting techniques and processes described herein for providing conditional passenger assistance. For example, the apparatus 200 may determine a condition 115 that is satisfied by vehicle data 109B and obtain a media element 119 that is associated with the satisfied condition. The apparatus 200 may cause outputting of the media element 119 to the passenger portion of the vehicle 101. In some embodiments, the passenger compliance system 103 includes one or more data stores 107. The various data in the data store 107 may be accessible to one or more of the apparatus 200, the vehicle management system 102, the operator computing device 105A, the passenger computing device 105B, and/or the like. The data store 107 may be representative of a plurality of data stores 107 as can be appreciated. The data stored in the data store 107, for example, is associated with the operation of the various applications, apparatuses, and/or functional entities described herein. The data stored in the data store 107 may include, for example, vehicle data 109B, conditions 115, categories 117, media elements 119, and/or the like.

In some embodiments, the apparatus 200 is configured to obtain the vehicle data 109B from the vehicle management system 102, one or more operator computing devices 105A, one or more passenger computing devices 105B, one or more external systems 106, and/or the like. In various embodiments, the vehicle data 109B includes any data associated with the operator or operation of the vehicle 101. In some embodiments, the vehicle data 109B includes vehicle statuses 111, operator commands 113, and/or the like. In some embodiments, the vehicle status 111 includes readings from one or more sensors or systems aboard the vehicle 101. For example, the vehicle status 111 may include temperatures, pressures, humidity levels, oxygen levels, carbon dioxide levels, and/or the like of the vehicle exterior or vehicle interior, such as within the operator portion, passenger portion, and/or the like. As another example, the vehicle status 111 may include images, videos, audio recordings, and/or the like of the vehicle exterior or vehicle interior. As another example, the vehicle status 111 may include measurements of vehicle speed, acceleration, ascension, descension, pitch, turning rate, bank angle, and/or the like. In some embodiments, a vehicle status 111 includes a metric of difference between a sensor measurement and a predetermined threshold, such as a target value, target range, limit, and/or the like.

In some embodiments, a vehicle status 111 includes a physical location of the vehicle 101, a proximity of the vehicle 101 to one or more physical locations (e.g., destinations, points of interest (POIs), and/or the like), a proximity of the vehicle 101 to other vehicles, and/or the like. In some embodiments, a vehicle status 111 includes a phase or progression of the vehicle 101 along a travel pathway. For example, the vehicle status 111 may include taxi, takeoff, ascent, cruising, pre-descent, descent, landing, arrival, and/or the like. In some embodiments, a vehicle status 111 includes presence of turbulence conditions or the forecasting of turbulent conditions (e.g., wind shear, mechanical turbulence, thermal turbulence, frontal turbulence, and/or the like). Additionally, or alternatively, a vehicle status 111 includes present or forecasted weather (e.g., winds, precipitation, temperature, fog, smog, dust), and/or the like.

In some embodiments, a vehicle status 111 includes one or more activities occurring onboard the vehicle 101. For example, the vehicle status 111 may include onboard passenger disturbances (e.g., disputes, unruliness, smoking, and/or the like), passenger or vehicle operator health events, and/or the like. As another example, the vehicle status 111 may include unauthorized use of emergency devices (e.g., emergency exits, rafts, masks, and/or the like). As another example, the vehicle status 111 may include failure or malfunction of one or more vehicle systems, such as elements of the vehicle management system 102, engines, landing gear, environmental regulation systems, restroom facilities, and/or the like.

In various embodiments, an operator command 113 includes directives, instructions, selections, and/or the like inputted by an operator of the vehicle 101. In such contexts, the operator of the vehicle 101 may be onboard or remote from the vehicle 101. For example, the operator of the vehicle 101 may be an operator of a ground station configured to remotely monitor and control the vehicle 101. Additionally, or alternatively, the operator of the vehicle 101 may be an autonomous computing resource, such as a vehicle-local, vehicle-remote, or hybridized autopilot. In some embodiments, an operator command 113 comprises natural language text, a selection of a GUI element (e.g., field, slider, button, and/or the like), an uttered word or key phrase, a gesture, and/or the like.

An operator command 113 may be associated with informing or instructing vehicle passengers. For example, an operator command 113 may include an instruction to alert and prepare passengers for a forecasted event (e.g., turbulence, adverse weather, and/or the like). As another example, an operator command 113 may include an instruction to alert and prepare passengers as to a failure or malfunction of a vehicle component or system. In another example, an operator command 113 may include an instruction to warn and prepare passengers for a steering maneuver, velocity change, acceleration change, and/or the like.

In some embodiments, an operator command 113 includes a condition identifier that identifies a condition 115, a category identifier that identifies a category 117, and/or the like. For example, the apparatus 200 may cause rendering of a GUI on a display 121A of an operator computing device 105B. The GUI may include a plurality of fields associated with different conditions 115 including vehicle ascending, vehicle descending, vehicle turning, turbulence, critical failure, and/or the like. In response to receiving a user input selecting a particular field, the apparatus 200 may receive from the computing device 105A an operator command comprising an identifier for the condition 115 with which the selected field is associated.

In some embodiments, conditions 115 include respective definitions for phenomena that may be experienced by a vehicle 101, vehicle operator, vehicle passenger, and/or the like. The respective definitions may include criteria for determining the presence of the phenomenon within the context of vehicle data 109A, 109B, 109'. For example, a condition 115 may be associated with "shock" and include criteria for determining that the vehicle 101, passengers, operator, and/or the like are experiencing or will experience turbulence. In such contexts, the criteria may include threshold levels of vibration or acceleration change, receipt of adverse weather or clear air turbulence (CAT) alerts, receipt of particular operator commands 113, and/or the like. As another example, a condition 115 may be associated with "point of interest (POI) guide" and include criteria for determining that the vehicle 101 is within a predetermined proximity of a POI location, a side of the vehicle 101 from which a POI is observable, and/or the like. In some embodiments, respective conditions 115 are associated with different predefined media elements 119, which may be outputted in response to a determination that vehicle data satisfies the condition 115.

In some embodiments, conditions 115 are associated with respective categories 117. In some embodiments, the categories 117 indicate a priority level of the condition 115 such that the apparatus 200 may determine whether to initiate or suppress output of media elements 119 for co-occurring conditions 115. For example, a first condition 115 for "POI alert" may be associated with an entertainment category, a second condition 115 for "making turn" may be associated with a precautionary category, and a third condition 115 for "control loss" may be associated with an emergency category. In such contexts, the emergency category may be prioritized over the precautionary category and the entertainment category, and the precautionary category may be prioritized over the entertainment category. In this manner, the apparatus 200 may determine to suppress outputting media elements 119 associated with the first condition 115 while the second condition 115 or third condition 115 are determined to be present. In some embodiments, the data store 107 includes one or more priority rankings of categories 117 that indicate a hierarchy by which conditions of different categories 117 may be prioritized.

In some embodiments, media elements 119 include effects that may be outputted to the passenger portion of the vehicle 101 to instruct or inform one or more passengers. For example, the media elements 119 may include respective program files for outputting audio effects, visual effects, tactile effects, and/or the like via one or more passenger computing devices 105B or other media sources located within the passenger portion of the vehicle 101. In some embodiments, an audible media element 119 (also referred to herein as an "audio element") includes one or more pre-recorded utterances of instructions, guidance, description, and/or the like. Additionally, or alternatively, in some embodiments, the apparatus 200 is configured to generate an audio element dynamically using a computer voice module, generative artificial intelligence model, and/or the like, which may be prompted based at least in part on vehicle data, a condition 115 determined to be satisfied by the vehicle data, a category 117 of the condition 115, and/or the like. Non-limiting examples of audio elements include entertainment information (e.g., POI descriptions, travel pathway information, entertainment options available, food items available, and/or the like), precautionary instructions (e.g., no smoking, depower devices, remain seated, buckle seatbelt, and/or the like), and emergency instructions (e.g., bracing positions, use of emergency exits and equipment, emergency communication information, and/or the like).

In some embodiments, a visible media element 119 (also referred to herein as a "visual element") includes one or more predefined images, videos, animations, and/or the like. For example, a visual element may include a geographic map comprising one or more POI locations and a location of the vehicle 101. As another example, a visual element may include a listing of rules or guidelines for passenger behavior. As another example, a visual element may include a diagram of emergency procedures, such as a proper bracing position, instructions for or against use of emergency equipment, and/or the like. In some embodiments, a tactile media element 119 includes one or more haptic patterns, intensities, and/or the like that may signal a passenger's attention, direct the gaze or movement of the passenger, and/or the like. For example, a computing device 105B may include one or more vibrational elements that may be activated to generate haptic effects for directing the gaze of a passenger to one or more regions, windows, or electronic displays. As another example, a tactile media element 119 may be outputted to awaken a passenger.

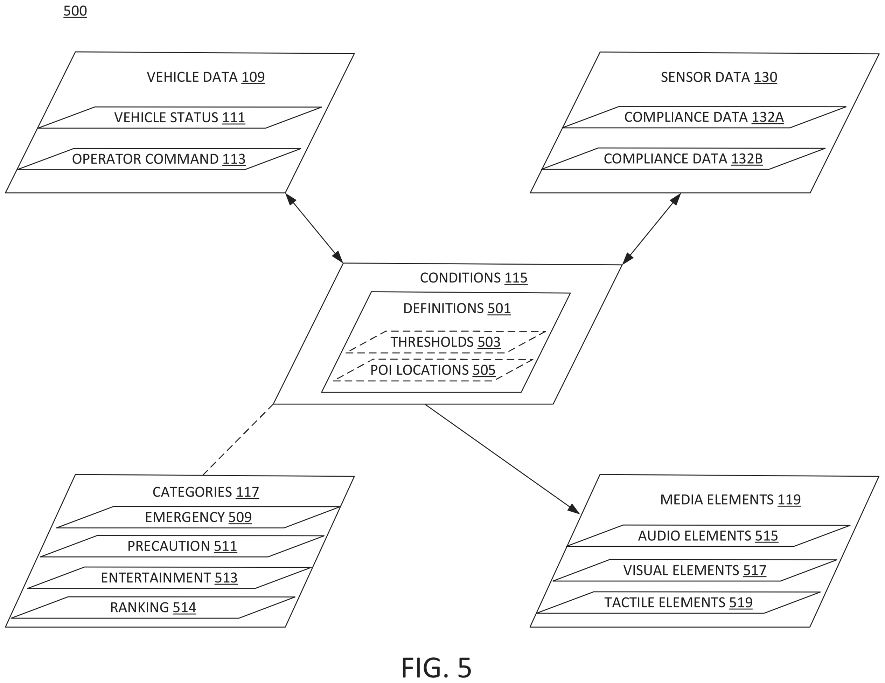

Additional example aspects of the vehicle data, conditions 115, categories 117, and media elements 119, are shown in the data architecture 500 depicted in FIG. 5 and described herein.

In some embodiments, the apparatus 200 is configured to obtain vehicle data 109A, 109' from the vehicle management system 102, computing devices 105A, 105B, external system 106, and/or the like. In various embodiments, the apparatus 200 is configured to perform workflows and processes herein to determine whether the vehicle data satisfies one or more conditions 115 and cause outputting of media elements 119 based at least in part on a satisfied condition 115 and associated category 117. In some embodiments, the apparatus 200 is configured to generate vehicle data 109B and/or the like based at least in part on recorded audio, images, video, and/or the like that is/are associated with the operator portion, the passenger portion, an environment external to the vehicle 101, and/or the like. For example, the apparatus 200 may obtain an audio recording of a vehicle operator and generate an operator command 113 based at least in part on the audio recording and a natural language processing module. As another example, the apparatus 200 may determine that images, video, and/or the like of a passenger portion shows a fire, a smoking passenger, or use of emergency equipment (e.g., exit doors, masks, fire suppressants, and/or the like). In such contexts, the apparatus 200 may perform image recognition processes to identify and classify visual content captured in the images, video, and/or the like.

In some embodiments, the apparatus 200 is configured to determine whether a condition 115 is satisfied based at least in part on vehicle data and one or more criterion associated with the condition 115. For example, the apparatus 200 may compare a vehicle status 111 to one or more thresholds or other criteria to determine if the vehicle status 111 matches or otherwise satisfies the threshold, criteria, and/or the like. In some embodiments the apparatus 200 determines a condition 115 to be satisfied based at least in part on receipt or generation of an operator command 113 confirming the presence of the condition 115. The apparatus 200 may determine satisfaction of multiple conditions 115 in a simultaneous or asynchronous manner. In some embodiments, the apparatus 200 is configured to determine or access a category 117 associated with a condition 115 that is determined to be satisfied by the vehicle data. For example, the apparatus 200 may access the data store 107 to determine whether a condition 115 is associated with a category of entertainment, precaution, or emergency. Further, the apparatus 200 may be configured to determine or access one or more media elements 119 associated with the satisfied condition 115.

In some embodiments, the apparatus 200 is configured to determine a co-occurrence or overlap of satisfaction of two or more conditions 115. In such instances, the apparatus 200 may determine a condition 115 to prioritize in the context of outputting media elements 119 to the passenger portion of the vehicle. In some embodiments, the apparatus 200 determines the condition 115 to prioritized based at least in part on the respective categories 117 with which the satisfied conditions 115 are associated. For example, the apparatus 200 may generate a priority ranking of the satisfied conditions based at least in part on the associated categories 117. In such contexts, the apparatus 200 may rank emergency-associated conditions ahead of all other conditions and rank precaution-associated conditions ahead of entertainment-associated emergency conditions.

In various embodiments, the apparatus 200 is configured to cause outputting of one or more media elements 119 on one or more computing devices 105B located in the passenger portion of the vehicle 101. For example, the apparatus 200 may cause rendering of visual information on one or more displays 121B, playback of audio effects on one or more audio devices 125B, and/or the like. In some embodiments, the apparatus 200 is configured to determine a subset of the passenger portion that is associated with the satisfied condition. For example, the apparatus 200 may determine one or more seats, rows, or columns of passengers that are associated with the condition 115. In some embodiments, the apparatus 200 is configured to cause outputting of a media element 119 on one or more computing devices 105B that are associated with the determined subset of the passenger portion. In this manner, the apparatus 200 may provide targeted assistance to individual passengers or groups of passengers.

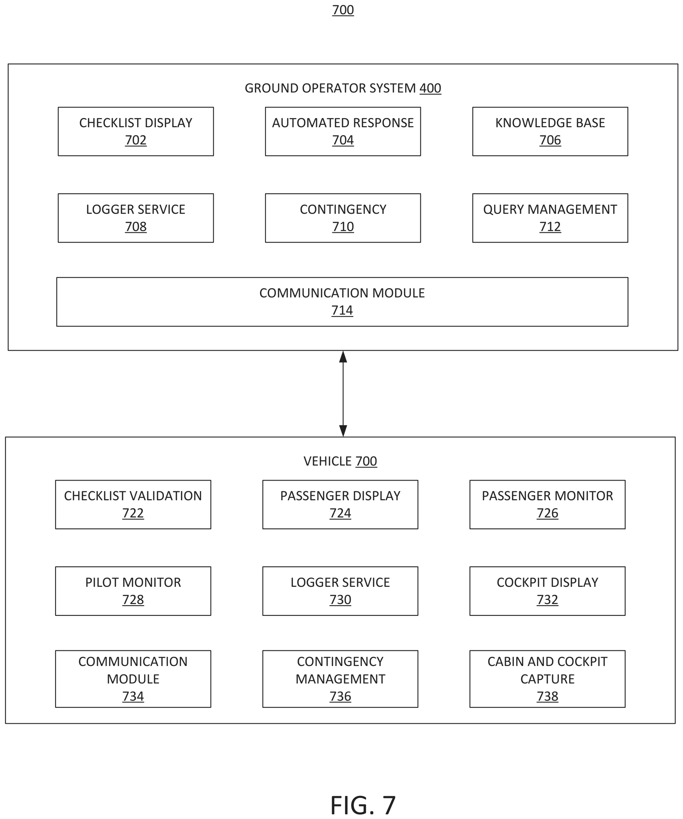

Additional example functionality, workflows, and processes of the passenger compliance system 103 (e.g., embodied as one or more apparatuses 200) are shown in the process 500 and process 700 depicted in FIGS. 5 and 7, respectively, and described herein.

In some embodiments, the passenger compliance system 103, vehicle management system 102, computing devices 105A, 105B, external system 106, and/or the like, are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200, the vehicle management system 102, the external system 106, and/or the like. For example, the apparatus 200 may receive vehicle data from an external system 106 via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

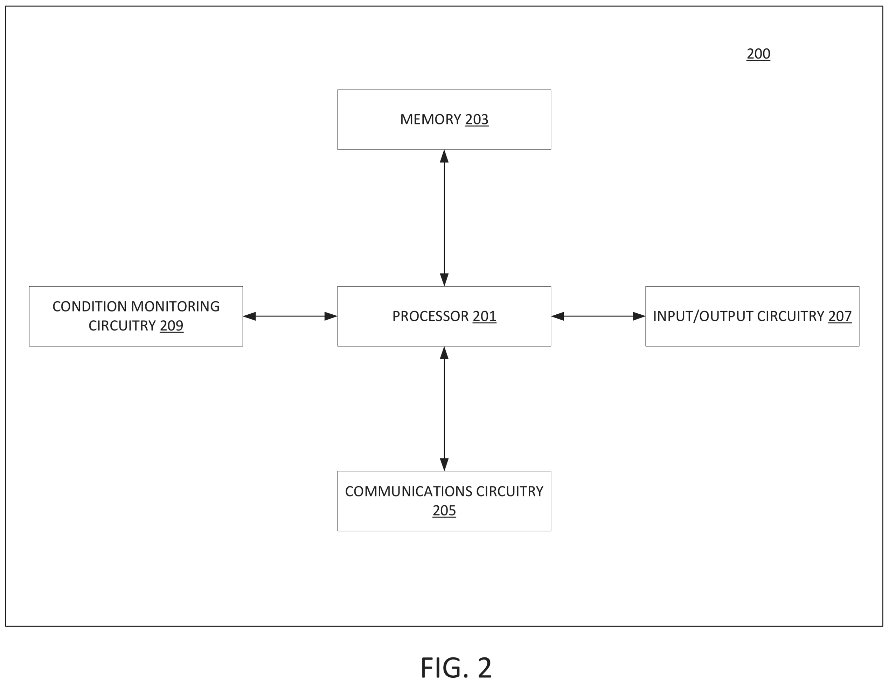

FIG. 2 illustrates a block diagram of an example apparatus 200 that may be specially configured in accordance with at least some example embodiments of the present disclosure. The apparatus 200 may carry out functionality and processes described herein to automate vehicle passenger compliance at least in part by determining conditions that are satisfied by vehicle data and causing outputting of predefined media elements in a passenger portion of the vehicle. In some embodiments, the apparatus 200 includes a processor 201, memory 203, communications circuitry 205, input/output circuitry 207, and condition monitoring circuitry 209. In some embodiments, the apparatus 200 is configured, using one or more of the processor 201, memory 203, communications circuitry 205, input/output circuitry 207, and/or condition monitoring circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, outputting, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

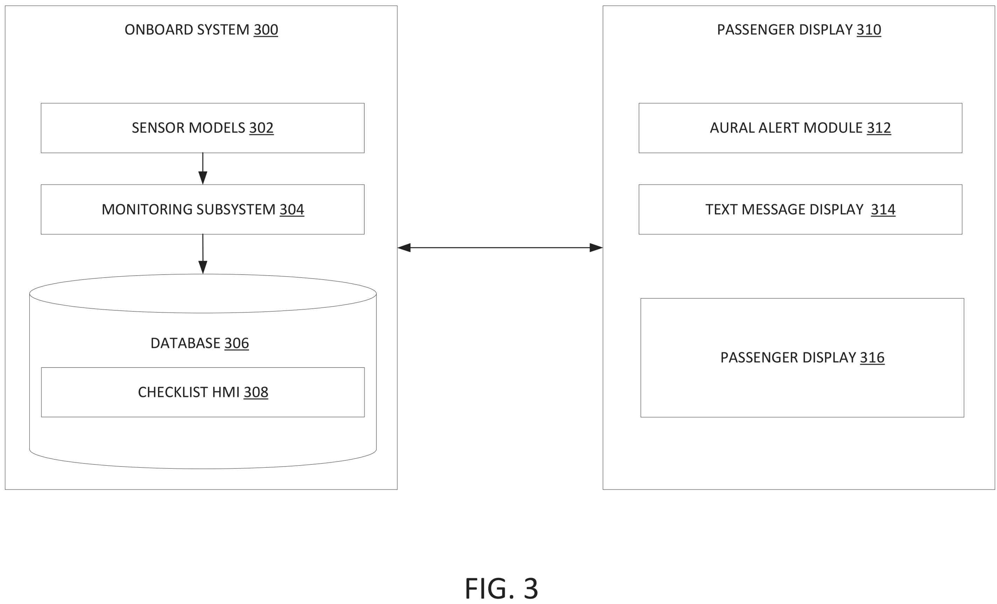

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., determining satisfaction of conditions, determining condition priority levels, causing output of predefined media elements, and/or the like). In some embodiments, the memory 203 is embodied as a data store 107 as shown in FIG. 1 and described herein. In some embodiments, the memory 203 includes vehicle data 109, conditions 115, categories 117, media elements 119, and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with providing conditional assistance and instruction to vehicle passengers. In some embodiments, the processor 201 includes hardware, software, firmware, and/or the like, that obtain vehicle data from vehicle management systems 102, external systems 106, and/or the like. For example, the processor 201 may obtain vehicle statuses from one or more vehicle management systems 102 configured to generate or measure vehicle speed, location, acceleration, health, and/or the like. As another example, the processor 201 may obtain operator commands from a computing device 105 associated with an operator of the vehicle 101. As another example, the process 201 may receive and store in the memory 203 conditions 115, categories 117, media elements 119, and respective associations therebetween. As another example, the processor 201 may generate conditions 115 based at least in part on data associated with operation of the vehicle 101, such as a travel pathway.

In some embodiments, the apparatus 200 includes input/output circuitry 207 that provides output to a user and, in some embodiments, receives an indication of a user input. In various embodiments, the user is an operator of a vehicle 101, where the operator may be aboard or remote from the vehicle 101. For example, in some contexts, the input/output circuitry 207 provides output to and receives input from one or more operator computing devices, ground station operators, and/or the like. Additionally, or alternatively, in some embodiments, the user includes passengers aboard the vehicle. For example, the input/output circuitry 207 may provide output to and receive input from one or more computing devices located in a passenger portion of a vehicle 101. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, vehicle controls (e.g., steering, power, braking, and/or the like), a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display of an operator computing device, passenger computing device, and/or the like.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from vehicle management systems 102, computing devices 105, and external systems 106 in communication with the apparatus 200. For example, the communications circuitry 205 may enable receipt of operator commands from a computing device 105 located in an operator portion of a vehicle 101. As another example, the communications circuitry 205 may enable transmission of data to a computing device located in a passenger portion of the vehicle 101.

The condition monitoring circuitry 209 includes hardware, software, firmware, and/or a combination thereof, that carry out processes for providing conditional guidance to passengers based at least in part on vehicle data. For example, in some contexts, the condition monitoring circuitry 209 includes hardware, software, firmware, and/or the like, that process vehicle data 109 to determine whether the vehicle data 109 meets one or more conditions 115. In some embodiments, the condition monitoring circuitry 209 includes hardware, software, firmware, and/or the like, that determine a category 117, media element 119, and/or the like with which a condition 115 is associated. In some embodiments, the condition monitoring circuitry 209 includes hardware, software, firmware, and/or the like, that determine a priority level of a condition 115 and/or priority ranking of a plurality of conditions 115 based at least in part on associated categories 117. For example, the condition monitoring circuitry 209 may determine whether to prioritize or suppress outputting a predefined media element 119 of a condition 115 based at least in part on the category 117 with which the condition 115 is associated and as compared to a category 117 of another condition 115 for which a predefined media element 119 is being outputted. In some embodiments, the condition monitoring circuitry 209 includes hardware, software, firmware, and/or the like, that cause outputting of predefined media elements 119 in a passenger portion of the vehicle 101. For example, the condition monitoring circuitry 209 may cause outputting of audio effects, visual effects, and/or the like via one or more computing devices located in a passenger portion of a vehicle 101. In some embodiments, the condition monitoring circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or condition monitoring circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication interface 205, and/or condition monitoring circuitry 209 is/are combined with the processor 201, such that the processor 201 performs one or more of the operations described above with respect to each of these sets of circuitry 203-209.

FIG. 3 illustrates an example onboard system architecture in accordance with at least some example embodiments of the present disclosure. As depicted, the onboard system architecture includes an onboard system 300 and a plurality of passenger displays 310. Onboard system 300 may include a sensor model 302, a monitoring subsystem 304, and a data store 306. As depicted, each passenger display 310 includes an aural alert module 312, a text message display 314, and a passenger display 316.

Sensor model 302 may be configured to capture real-time state information corresponding to one or more sensors associated with a subject vehicle. In at least some embodiments, the one or more sensors are installed inside a passenger portion of a vehicle, such as a cabin, and/or in an operator portion of a vehicle, such as a cockpit. Sensor model 302 may be configured to receive real-time state information corresponding to the one or more sensors, and may transmit this information to monitoring subsystem 304.

Monitoring subsystem 304 may be a system or application configured to parse the sensor data received from sensor model 302. In at least some embodiments, monitoring subsystem 304 is trained or otherwise informed using a set of compliance and/or adherence protocols dictating required sensor states for vehicle operation. In at least some embodiments, such as those where the set of compliance protocols are provided in natural language format, for example, and describe required passenger conditions (rather than explicit sensor conditions), monitoring subsystem 304 may be configured to leverage natural language processing (NLP) techniques to determine one or more compliant sensor states corresponding to the sensor model 302 and the set of compliance protocols. In at least some embodiments, the set of compliance protocols correspond to a set of Standard Operating Procedures (SOPs). In general, monitoring subsystem 304 is configured to determine whether current state information corresponding to a set of monitored sensors complies with a set of compliance guidelines. Data store 306 may be configured to store any of sensor data, sensor model data, versions of checklist HMI 308, compliance protocols, sensor state information, and the like. Checklist HMI 308 may be a human machine interface configured to display checklist information to a user and facilitate user interactions with the checklist information. Checklist HMI 308 may be configured to display non-adherence of passenger conditions according to the set of compliance guidelines or other standard operating procedures. In at least some embodiments, the checklist HMI 308 may be configured to trigger display of a corresponding message on a passenger display subsystem instructing the passenger to adhere to the required condition(s). An example of checklist HMI 308 is described in further detail with respect to FIG. 7.

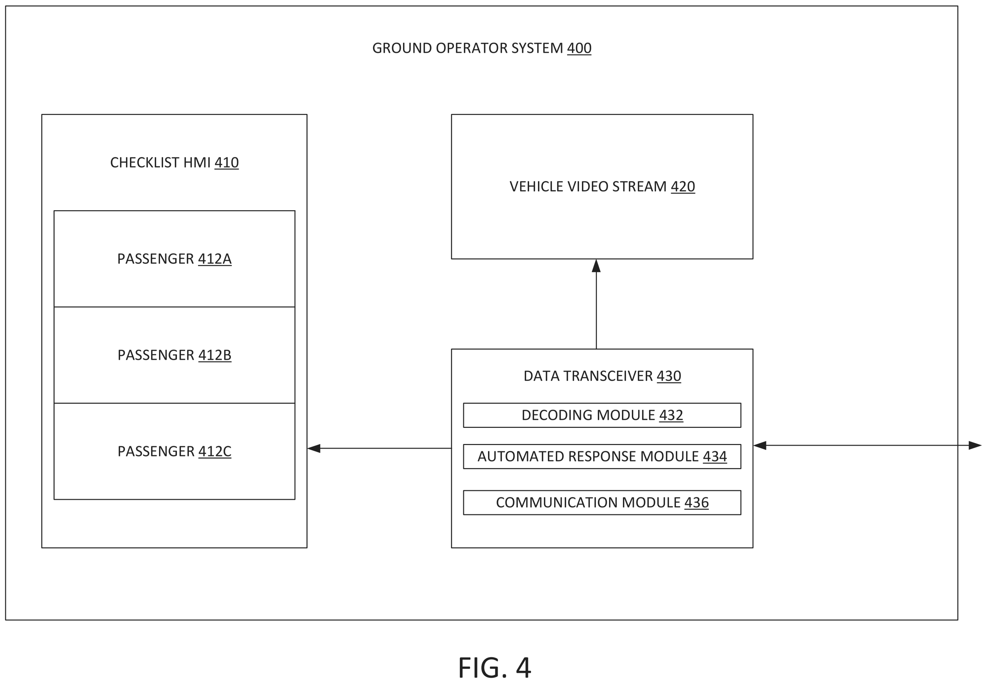

FIG. 4 illustrates an example ground operator system 400 for monitoring and managing passenger compliance in accordance with at least some embodiments of the present invention. As depicted, ground operator system 400 includes a checklist HMI 410, a vehicle video stream 420, and a data transceiver 430. Ground operator system 400 may be configured for communicating with one or more subject vehicles via a network (not pictured).

Checklist HMI 410 may be any interface capable of, and configured for, displaying condition compliance details associated with one or more passengers of a subject vehicle. In general, checklist HMI 410 is configured to display a checklist indicating whether or not each passenger 412 (412A, 412B, 412C, for example) of the subject vehicle is currently complying with one or more conditions as monitored by the checklist. For example, if a checklist is configured for monitoring whether a passenger is seated, whether a passenger's seatbelt is connected, and whether a passenger's seat is in an upright position, the checklist may display, for each passenger, a first icon indicating whether the passenger's seatbelt is connected, a second icon indicating whether the passenger is seated, and a third icon indicating whether the passenger's seat is in an upright position. In at least some embodiments, checklist HMI 410 may comprise an option, or be configured by default, to display only passengers who are not currently in compliance with all monitored conditions to facilitate efficient identification. For example, for a vehicle with 40 passengers, if 37 passengers are compliant with all monitored conditions, then checklist HMI 410 may be configured to display only the checklist information corresponding to the three passengers who are not currently compliant with all required conditions. In at least some embodiments, checklist HMI 410 is configured to display an image or captured video frame corresponding to each passenger 412A, 412B, 412C along with the compliance indications.

Vehicle video stream 420 may be a received video stream corresponding to the subject vehicle. For example, video stream 420 may be a video stream displaying a current state of a portion of a vehicle, such as a passenger portion comprising passenger seats. Vehicle video stream 420 may additionally include a recently recorded video corresponding to a boarding operation during which passengers boarded the subject video. In general, vehicle video stream 420 corresponds to any media content displaying the subject vehicle in some capacity.

Data transceiver 430 may be configured to receive data from passengers and/or an operator of a vehicle. In general, data transceiver 430 is configured to facilitate communications between an operator of the ground operator system 400, passengers of a subject vehicle, and/or an operator of said subject vehicle. As depicted, data transceiver 430 may include, or may be operably connected to, a decoding module 432, an automated response module 434, and a communication module 436.

Decoding module 432 may be a device or application configured to receive compressed video streams and output decompressed data viewable by a user. In at least some embodiments, decoding module 432 may be configured to receive vehicle video stream 420 in compressed format, and may provide the decompressed version to a video application configured to display the video stream 420 to a user of the ground operator system 400.

Automated response module 434 may include a natural language processing module configured to generate responses to queries received from passengers and/or crew of the subject vehicle. In at least some embodiments, automated response module 434 is configured to process a subject query and retrieve corresponding information from a knowledge base. The knowledge base may be implemented locally to the automated response module 434, or remotely and accessible via a network. In at least some embodiments, the automated response module 434 may be configured with translation capabilities, thereby enabling automated responses to be provided in a language appropriate to the passenger or other user issuing the query.

Communication module 436 may be configured to facilitate direct communication between the ground operator system and a passenger/operator of the subject vehicle. In at least some embodiments, communication module 436 is configured to receive messages (text, voice, audio, etc.) from the passenger or the operator of the subject vehicle, and present the messages via the ground operator system. For example, communication module 436 may be configured to play a received audio message via an integrated speaker or a connected audio device. Communication module 436 may be configured to display received text messages via a display. In at least some embodiments, communication module 436 is configured to receive free-text messages as submitted by a passenger and/or an operator.

### Example Data Architecture of the Disclosure

Having described example systems and apparatuses in accordance with embodiments of the present disclosure, example architectures of data in accordance with the present disclosure will now be discussed. In some embodiments, the systems and/or apparatuses described herein maintain data environment(s) that enable the workflows in accordance with the data architectures described herein. For example, in some embodiments, the systems and/or apparatuses described herein function in accordance with the data architectures depicted and described herein with respect to FIG. 3 are maintained via the apparatus 200.

FIG. 5. illustrates an example data architecture 500 in accordance with at least some example embodiments of the present disclosure. In some embodiments, vehicle data 109 includes vehicle statuses 111, operator commands 113, and/or the like. In some embodiments, vehicle statuses 111 include vehicle location, proximity to POI locations 505, heading, attitude, velocity, acceleration, pitch, travel phase (e.g., taxiing, ascending, cruising, descending, arriving, and/or the like), altitude, internal temperature, internal pressure, vibration level, component failure or malfunction, and/or the like. In some embodiments, vehicle statuses 111 include detect passenger behaviors or conditions including passenger position (e.g., standing, seated, buckled, unbuckled), passenger health, use of vehicle equipment (e.g., entertainment amenities, lavatory facilities, emergency equipment, and/or the like), emotional state, and/or the like. In some embodiments, passenger behaviors or conditions are determined based at least in part on recordings of a passenger portion of the vehicle 101, such as audio recordings or image data (e.g., images, video feeds, and/or the like). In some embodiments, vehicle statuses 111 include data obtained from one or more external systems 106. For example, vehicle statuses 111 may include weather reports, turbulence reports, vehicle traffic reports, and/or the like.

In some embodiments, operator commands 113 include inputs to vehicle controls, operator computing devices, and/or the like. For example, an operator command 113 may include a control input for adjusting the velocity or position of the vehicle 101. As another example, an operator command 113 may include a control input for reporting a component malfunction or failure. In some embodiments, an operator command 113 is configured to indicate one or more conditions 115. For example, an operator command 113 may be configured to indicate an emergency-related condition, such as wind shear, abnormal attitude, loss of control, and/or the like. As another example, an operator command 113 may be configured to indicate a precaution-related condition 115, such as preparation for a vehicle maneuver (e.g., change in vehicle altitude, angular orientation, velocity, and/or the like). As another example, an operator command 113 may be configured to indicate an entertainment-related condition 115, such as proximity of the vehicle 101 to POI locations 505 or availability and/or activation of in-vehicle entertainment features (e.g., films, tourism information, explanatory guides, trivia, and/or the like).

In various embodiments, sensor data 130 includes data received from one or more vehicle sensors configured to monitor vehicle and/or passenger compliance states. For example, with respect to passenger compliance data, sensor data 130 may comprise compliance data 132A and compliance data 132B, wherein each of the compliance data 132 corresponds to a condition monitored for compliance with a set of standard operating procedures. For example, in an embodiment where passenger seats are configured with one or more sensors for determining whether a passenger is seated and one or more sensors for determining whether a passenger's seatbelt is in use, compliance data 132A may correspond to passenger seating data and compliance data 132B may correspond to seatbelt data.

In various embodiments, a condition 115 includes a definition 501 associated with determining whether vehicle data 109 satisfies the condition. For example, a respective definition 501 may include a vehicle status 111, operator command 113, and/or the like that, when obtained, causes a positive determination that the condition 115 is present. A definition 501 may include one of more thresholds 503 to which vehicle data 109 may be compared to determine satisfaction of the condition 115. For example, a threshold 503 may be associated with a value or range of temperature, pressure, in-vehicle gas concentrations (e.g., oxygen, carbon dioxide, carbon monoxide, and/or the like), shock, vibration, acceleration, velocity, ascension rate, descension rate, turning rate, pitch, altitude, depth, noise level, and/or the like. In some embodiments, a definition 501 includes one or more actions, utterances, behaviors, and/or the like. For example, a definition 501 may include predefined passenger behaviors, actions, positions, and/or the like, which may be detected based at least in part on recordings of the passenger portion of the vehicle 101.

In some embodiments, a condition 115 is associated with one of a plurality of categories 117, which may indicate a level of priority of the condition. In some embodiments, the categories 117 include emergency 509, precaution 511, entertainment 513, and/or the like. In some embodiments, conditions 115 that are associated with emergency 509 are assigned a highest level of priority such that their respective media elements 119 may be outputted to interrupt or suppress the output of media elements 119 associated with precaution 511 or entertainment 513. The conditions 115 associated with the emergency category may require proper passenger action immediately to mitigate a hazard, or prepare for a potential hazard, that imminently threatens passenger safety. In some embodiments, conditions 115 of the emergency category include fires, loss of vehicle control, depressurization of the vehicle 101, forecast or experience of turbulence, forecast or experience of collision, passenger health emergency, rapid changes in vehicle position or acceleration, unauthorized use of vehicle equipment (e.g., attempts to open emergency exit doors, activate fire suppressants, or deploy flotation devices), and/or the like.

In some embodiments, conditions 115 that are associated with precaution 511 are assigned a middle level of priority such that their respective media elements 119 may be outputted to interrupt or suppress the output of media elements 119 associated with entertainment 513. The conditions 115 associated with the precaution category may require passengers to perform actions ahead of time to prepare for preplanned events, such as vehicle position or acceleration changes, vehicle departure, vehicle landing, and/or the like. In some embodiments, conditions 115 of the precaution category include planned vehicle maneuvers including turns, ascensions, descensions, accelerations, landings, takeoffs, and/or the like in accordance with a travel pathway of the vehicle 101. In some embodiments, conditions 115 of the precaution category include deactivation of passenger computing devices, fastening seatbelts, seating passengers, and/or the like.

In some embodiments, conditions 115 that are associated with entertainment 513 are associated with a lowest level of priority such that their respective media elements 119 may be outputted in instances where no media elements 119 associated with emergency 509 or precaution 511 are present. The conditions associated with the entertainment category may provide travel entertainment information and activities to passengers to improve their travel experience. In some embodiments, conditions 115 of the entertainment category include proximity POI locations 505, visibility of POIs, availability of amenities (e.g., films, games, shows, consumables, and/or the like), movement of the vehicle 101 between segments of a travel pathway, and/or the like.

In various embodiments, a respective condition 115 is associated with one or more media elements 119. In some embodiments, media elements 119 include audio elements 515, visual elements 517, tactile elements 519, and/or the like. In some embodiments, audio elements 515 include audio recordings, such as recorded or computer-generated utterances of passenger instructions. In some embodiments, visual elements 517 include images, videos, animations, and/or the like, such as diagrams of anti-shock bracing positions, videos of a POI, mappings of the passenger portion and/or features of the vehicle 101, and/or the like. In some embodiments, tactile elements 519 include haptic patterns and intensities. For example, a tactile element 519 may include haptic patterns configured to indicate from which side of the vehicle 101 a POI may be observed. As another example, a tactile element 519 may include haptic patterns and intensities configured to awaken or alert one or more passengers. In some embodiments, tactile elements 519 may be outputted via a passenger computing device or infrastructure of the vehicle 101, such as a seatbelt, seat, flooring section, and/or the like.

In some embodiments, the data architecture 500 includes one or rankings 514 configured to indicate hierarchies of priority amongst the categories 117, conditions 115, and/or the like. For example, a ranking 514 may be a data object that encodes a hierarchical relationship between the categories of emergency 509, precaution 511, and entertainment 513. In such contexts, the ranking 514 may assign emergency 509 to a highest level of priority and entertainment 513 to a lowest level of priority. As another example, a ranking 504 may encode a hierarchical relationship between conditions 115 assigned to the same category 117. In such contexts, the ranking 514 may assign a highest level of priority to conditions associated with the greatest immediate hazard to passenger safety (e.g., fire, depressurization, loss of vehicle integrity).

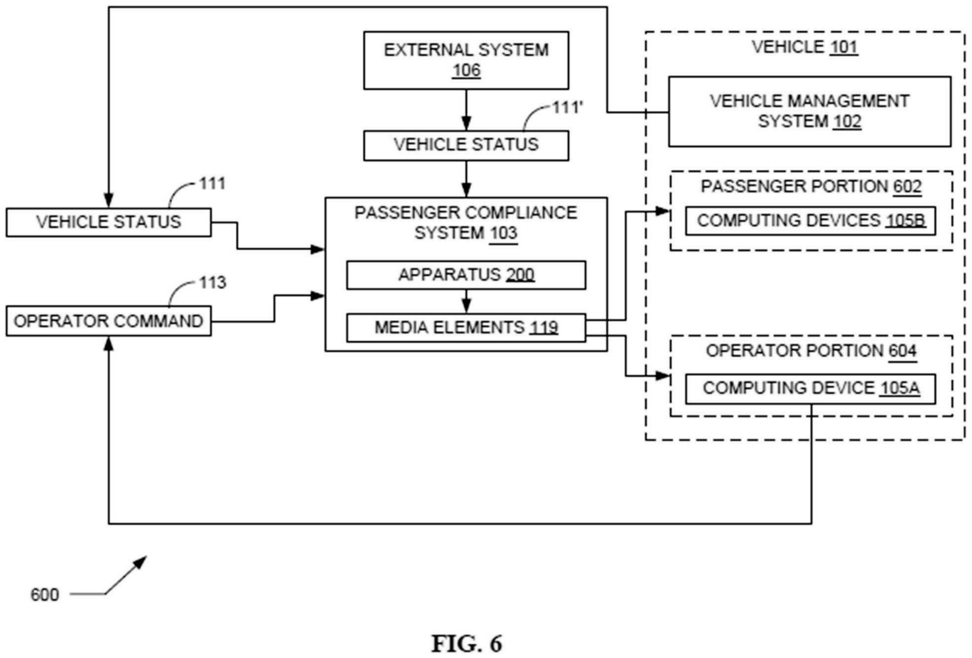

FIG. 6 illustrates an example workflow 600 for managing condition compliance. In various embodiments, the workflow 600 includes the passenger compliance system 103 receiving and processing vehicle statuses 111 from a vehicle management system 102, vehicle statuses 111' from one or more external systems 106, operator commands 113 from computing devices 105A in an operator portion 604, and/or the like. For example, the passenger compliance system 103 may receive from the vehicle management system 102 one or more system failure reports including statuses of vehicle controls, propulsion, power, interion environment regulation, and/or the like. As another example, the passenger compliance system 103 may receive weather reports generated by remote weather monitoring services, where the weather reports may indicate turbulence factors, such as wind shear. As another example, the passenger compliance system 103 may receive terrain warnings from onboard ground proximity warning systems or offboard radar systems. As another example, the passenger compliance system 103 may obtain values of vehicle altitude, attitude, geographical location, proximity to POI locations, and/or the like from onboard systems (e.g., navigation systems, air data systems, inertial reference systems, and/or the like) or an external system, such as a ground station. In another example, the passenger compliance system 103 may receive from the computing device 105A an instruction to direct passengers in performing emergency safety procedures (e.g., bracing, vehicle egress, oxygen regulation, and/or the like).

In various embodiments, the workflow 600 includes the passenger compliance system 103 determining satisfaction of a condition based at least in part on the obtained data and causing output of one or more media elements 119 in a passenger portion 602 of the vehicle 101. For example, based at least in part on the condition determined to be satisfied, the passenger compliance system 103 may cause output of audible passenger instructions, visual passenger guidance, and/or the like via one or more computing devices 105B located in the passenger portion 602. In an aerial context, the computing devices 105B may include media devices integrated into an air cabin, such as speaker systems, seat-mounted monitors, overhead monitors, and/or the like.

In some embodiments, the passenger compliance system 103 suspends output of a first media element 119 such that a second media element 119 associated with greater priority may be outputted to the passenger portion 602. In some embodiments, the passenger compliance system 103 causes output of multiple media elements 119 asynchronously, simultaneously, and/or the like. The multiple media elements 119 may be associated with the same or different conditions. Additionally, or alternatively, the multiple media elements 119 may be outputted in different subsections of the passenger portion 602. For example, a first media element 119 may be outputted via a subset of passenger computing devices 105B located in a first subsection, and a second media element 119 may be outputted via a second subset of passenger computing devices 105B located in a separate subsection. In this manner, the passenger compliance system 103 may supplement the services and contributions of multiple human assistants. In doing so, the passenger compliance system 103 may increase the throughput, efficiency, and specificity of passenger services as compared to manual approaches.

FIG. 7 illustrates a functional block diagram depicting components of a compliance management system 700 in accordance with at least some example embodiments of the present invention. As depicted, the compliance management system includes a ground operator system 400 and a vehicle 700. As depicted, ground operator system 400 includes a checklist display module 702, an automated response module 704, a knowledge base module 706, a logger service module 708, a contingency module 710, a query management module 712, and a communication module 714. Vehicle system 700 may include a checklist validation module 722, a passenger display module 724, a passenger monitoring module 726, a pilot monitoring module 728, a logger service 730, a cockpit display 732, a communication module 734, a contingency management module 736, and a cabin and cockpit capture module 738. In at least some embodiments, a communication module 714 of the ground operator system 400 communicates with a communication module 734 of the vehicle 700. In general, communication module 714 and communication module 734 are each a unit enabling intercommunication and data exchange with one another. In at least some embodiments, the vehicle 700 includes a closed loop subsystem configured to evaluate passenger status against each of a plurality of standard operating procedures and validate one or more checklist items prior to vehicle operation. In at least some embodiments, such as those wherein the vehicle 700 is an aircraft, the checklist items may be validated in accordance with a pre-flight, takeoff, or landing phase.

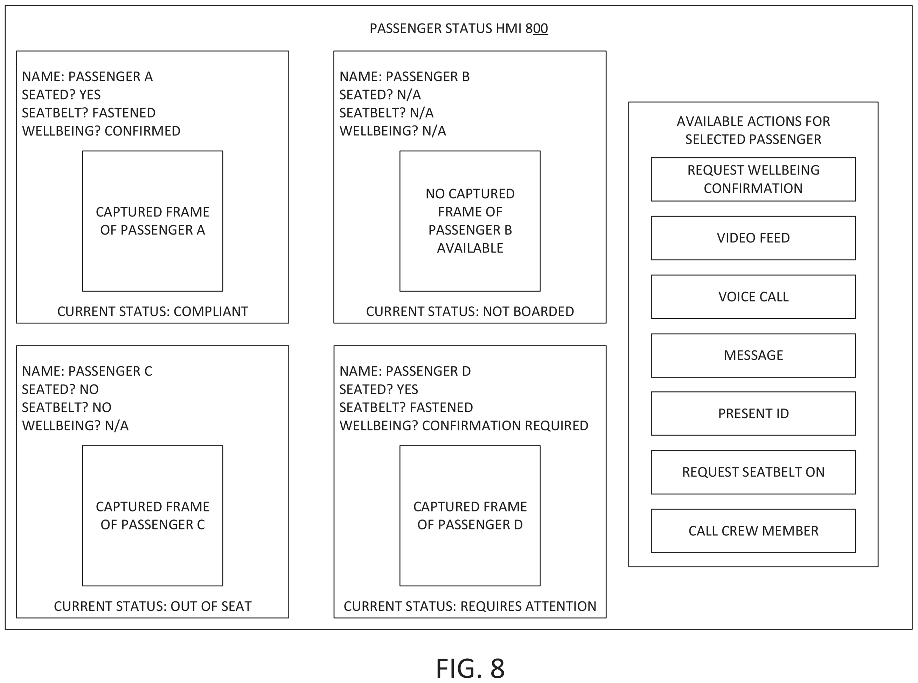

Checklist display module 702 may be an interface configured to display a checklist indicating required conditions for vehicle operation in accordance with a set of standard operating procedures. In at least some embodiments, checklist display module 702 is configured to display each passenger's compliance with each of a set of conditions for vehicle operations as indicating by the set of standard operating procedures. In at least some embodiments, checklist display module 702 is configured to provide one or more selectable icons configured to facilitate execution of one or more operations corresponding to an associated passenger and/or condition of the checklist. For example, checklist display module 702 may be an interface comprising a touchscreen on which an icon is displayed enabling a ground operator to initiate a communication (verbal or text based) with a passenger corresponding to a checklist condition. A ground operator may utilize the selectable icon to communicate with the passenger to instruct the passenger regarding how they may alter their current state to comply with the standard operating procedures. In at least some embodiments, checklist display module 702 provides one or more selectable icons allowing a user to send one or more pre-determined messages regarding passenger compliance to a passenger based on their current compliance state. For example, if checklist display module 702 indicates a passenger does not have their seatbelt engaged, checklist display module 702 may be configured to provide a selectable option to a user, wherein selection of the selectable option initiates transmission of a text message to a passenger display instructing the passenger to engage their seatbelt. An example of an appropriate display module is described with respect to FIG. 8.

An automated response module 704 may include a natural language processing module configured to generate responses to queries received from passengers and/or crew of the vehicle 700. In at least some embodiments, automated response module 704 is configured to process a subject query and retrieve corresponding information from knowledge base module 706. In at least some embodiments, the automated response module 704 may be configured with translation capabilities, thereby enabling automated responses to be provided in a language appropriate to the passenger or other user issuing the query.

Knowledge base module 706 may be a data store or other database configured to store data associated with current operation of vehicle 700. In at least some embodiments, knowledge base 706 includes real-time vehicle telemetry and other messages received from vehicle 700 along with information extracted from standard operating procedures databases and/or guidelines as well as additional informational sources relevant to resolving passenger/pilot queries. For example, knowledge base module 706 may be configured to provide current route information corresponding to a vehicle's travel path, including an indication of whether the vehicle's route is currently on-time (as opposed to delayed, for example).

Logger service module 708 may be configured to receive messages from all services of ground operator system 400 and record the messages to a common log. For example, logger service module 708 may be configured to write received queries, issued query responses, corresponding knowledge base retrievals, checklist operations, messages pursuant to operations taken responsive to a checklist condition, and any other communications to a common log in a data server.

Contingency module 710 may be configured to manage operations associated with diverting vehicle 700 away from its planned route/destination. For example, in an instance where a vehicle must divert course to a nearer destination responsive to an emergency detected with the vehicle's operator, contingency module 710 may be configured to determine a nearest available destination for diversion. Contingency module 710 may be configured to automatically send required messages requesting permission to divert vehicle course (such as querying a nearby airport to determine whether said airport can facilitate an emergency landing, for example).

Query management module 712 may be configured to receive queries from systems of the vehicle 700 and convert the received queries into data processable by the automated response module 704. Query management module 712 may additionally be configured to provide the generated automated responses to a subject user based on information retrieved from the knowledge base 706. In at least some embodiments, query management module 712 may additionally be configured to generate queries to be provided to a passenger. In an embodiment where a passenger has not replied to a previous prompt as issued via the passenger display, for example, query management module 712 may be configured to generate an additional query to the passenger requesting confirmation of the passenger's wellbeing. In such embodiments, query management module 712 may be configured to transmit an interface selection to passenger display 724 via which the passenger can either indicate that they are indeed well or can indicate that they require assistance. Such a transmission may include any of audial, visual, or haptic notifications. A haptic notification may be delivered through the passenger seat, for example. Should a user indicate an undesirable state/a need for assistance, either via response to a query or via expiration of a time limit with no received response, query management module 712 may notify passenger monitoring module 726 of a potential passenger incident.

Checklist validation module 722 may be configured to validate the checklist with respect to current state information corresponding to one or more subject sensors. In at least some embodiments, checklist validation module 722 is configured to obtain a current state corresponding to any number of sensors which inform passenger compliance with subject standard operating procedures. Checklist validation module 722 may be configured to automatically compare the current state information to corresponding compliant state information indicated according to the standard operating procedures. In at least some embodiments, checklist validation module 722 may be configured to flag one or more passengers who are currently not compliant with at least one condition of the standard operating procedures required for takeoff. Flagging one or more passengers in this manner may include sending a notification to crew members and/or the passenger display system associated with the flagged passenger. Such a notification may include an image of the passenger, such as an image of the passenger's identification photo or an identified captured frame of the passenger.

Passenger display module 724 may be an interface associated with the passenger's seat via which the passenger can view or otherwise receive information from a vehicle operator or a ground operator, for example. In at least some embodiments, passenger display module 724 is a display monitor individually assigned to the passenger's seat (such as a display in the back of an airplane seat). In other embodiments, passenger display module 724 may include a display viewable to a group of passengers (such as an overhead screen). Passenger display module 724 may be configured to provide one or more notifications to one or more passengers regarding current compliance statuses.

Passenger monitoring module 726 may be configured to aggregate information from one or more sensors corresponding to current passenger compliance information. In at least some embodiments, passenger monitoring module 726 is configured to retrieve sensor information corresponding to one or more sensors associated with passenger compliance. Passenger monitoring module 726 may be configured to provide said sensor information to checklist validation module 722 for comparison against one or more standard operating procedures/compliance requirements. In at least some embodiments, passenger monitoring module 726 is further configured to monitor and/or record a boarding process wherein passengers board vehicle 700. As such, passenger monitoring module 726 may include a camera or other video capture device configured to provide a media stream depicting passengers boarding, exiting, or otherwise moving about the vehicle 700. In such embodiments, passenger monitoring module 726 may additionally be configured to execute facial recognition techniques with respect to the passengers boarding the vehicle 700. Passenger monitoring module 726 may further be configured to identify one or more frames clearly depicting a subject passenger boarding or otherwise located on vehicle 700, and may compare the subject image to an image database, such as a set of images depicting identification documents for the passengers of vehicle 700. The set of images may be generated or otherwise managed based on users providing their photo identification when checking in or immediately prior to boarding, for example.

In at least some embodiments, passenger monitoring module 726 may be configured to monitor a passenger's wellbeing. In such embodiments, passenger monitoring module 726 may be configured to generate a query to a passenger requesting confirmation of the passenger's wellbeing. In such embodiments, passenger monitoring module 726 may be configured to transmit an interface selection to passenger display 724 via which the passenger can either indicate that they are indeed well or can indicate that they require assistance. Such a transmission may include any of audial, visual, or haptic notifications. A haptic notification may be delivered through the passenger seat, for example. Should a user indicate an undesirable state/a need for assistance, either via response to a query or via expiration of a time limit with no received response, passenger monitoring module 726 may be configured to notify a pilot, operator, crew member, ground operator, or emergency personnel accordingly.

Pilot monitoring module 728 may be configured to monitor an operator's wellbeing. In such embodiments, pilot monitoring module 728 may be configured to generate a query to a pilot requesting confirmation of the vehicle operator's wellbeing. In such embodiments, pilot monitoring module 728 may be configured to transmit an interface selection to cockpit display 732 via which the operator can either indicate that they are indeed well or can indicate that they require assistance. Such a transmission may include any of audial, visual, or haptic notifications, and may be configured to receive a response verbally or via selection via the cockpit display 732. Should a pilot indicate a need for assistance, either via response to a query or via expiration of a time limit with no received response, pilot monitoring module 728 may be configured to notify another operator, a crew member, a ground operator, or emergency personnel accordingly.

Logger service module 730 may be configured to receive messages from all services of vehicle 700 and record the messages to a common log. For example, logger service module 730 may be configured to write received queries, issued query responses, corresponding knowledge base retrievals, checklist operations, messages pursuant to operations taken responsive to a checklist condition, and any other communications to a common log in a data server.

Cockpit display 732 may be configured to display current checklist information corresponding to current compliance with standard operation procedures for the vehicle 700. In at least some embodiments, cockpit display 732 may be configured to display a checklist human machine interface (HMI). An example of an appropriate HMI is described in further detail with respect to FIG. 8.

Contingency management module 736 may be configured to manage operations associated with diverting vehicle 700 away from its planned route/destination. For example, in an instance where a vehicle must divert course to a nearer destination responsive to an emergency detected with the vehicle's operator, contingency module 736 may be configured to determine a nearest available destination for diversion. Contingency module 736 may be configured to automatically send required messages requesting permission to divert vehicle course (such as querying a nearby airport to determine whether said airport can facilitate an emergency landing, for example). Contingency management module 736 may additionally be configured to manage operations of vehicle 700 in case of an operator incapacitation. For example, contingency management module 736 may be configured to place the vehicle 700 into an autopilot mode responsive to detecting a pilot incapacitation. In general, contingency management module 736 is configured to execute a set of predetermined operations responsive to detection of an emergency situation.

Cabin and cockpit capture module 738 may include one or more media capture devices configured to monitor and/or record one or more sections of vehicle 700, such as a passenger compartment or "cabin" and an operator portion or "cockpit". In at least some embodiments, capture module 738 is configured to provide one or more recordings of one or more passengers of the vehicle 700. Capture module 738 may additionally be configured to execute facial recognition techniques with respect to the passengers boarding the vehicle 700. Capture module 738 may further be configured to identify one or more frames clearly depicting a subject passenger boarding or otherwise located on vehicle 700, and may compare the subject image to an image database, such as a set of images depicting identification documents for the passengers of vehicle 700. The set of images may be generated or otherwise managed based on users providing their photo identification when checking in or immediately prior to boarding, for example. In at least some embodiments, capture module 738 may be configured to provide textual descriptions of cabin video to a ground operator; in such embodiments, capture module 738 may provide these textual descriptions rather than video in situations where data transmission is limited.

### Example Human Machine Interfaces of the Disclosure

Having described example systems and apparatuses, data architectures, and data flows in accordance with the disclosure, example Human Machine Interfaces of the present disclosure will now be discussed. It will be appreciated that each of the diagrams depicts an example interface that is implementable by one or more of the apparatuses, systems, devices, and/or computer program products described herein, for example utilizing one or more of the specially configured components thereof.

FIG. 8 depicts one example of a passenger status human machine interface 800 in accordance with at least some example embodiments of the present invention. As depicted, the passenger status human machine interface 800 includes compliance information corresponding to four passengers. In various embodiments, a passenger status human machine interface 800 may display any number of passengers simultaneously, and may be arranged according to a seating map, for example. Human machine interface 800 may include options to zoom in or out on the seating map to display more passengers at once or fewer passengers with increased granularity and/or additional status information for each passenger accordingly.

As depicted, each passenger compliance segment indicates some passenger information as well as current compliance information corresponding to one or more compliance requirements. With respect to the depicted HMI 800, the subject compliance information includes whether the passenger is seated, whether the passenger's wellbeing is confirmed, whether the passenger's seatbelt is fastened, and ultimately an indication of whether or not the passenger is in compliance with each of the defined conditions. The identifying information corresponding to the passenger includes the passenger's name and a captured frame of the passenger, as identified by one or more capture devices during the boarding process, for example, and identified using facial recognition techniques on the captured frame as compared to a provided photo identification.

As depicted, passenger A is seated, with their seatbelt fastened and a confirmation of their wellbeing. As such, passenger A is indicated as compliant, and may be removed from an action-based depiction of the checklist configured to provide an operator with actionable information corresponding to passengers who are currently not in compliant condition.

As depicted, no compliance information regarding passenger B is available, as passenger B appears to not have boarded the vehicle. As such, no captured frame of passenger B is available for display, and their status is reflected as "not boarded." In some embodiments, a "not boarded" status may not impact compliance, such that passengers who have not made it to the vehicle on time and are therefore not onboard do not influence the compliance status of passengers actually located on the vehicle.

As depicted, passenger C is not seated, and therefore their seatbelt is not fastened nor is their wellbeing confirmed. As such, passenger C's status is reflected as "out of seat." In some embodiments, an "out of seat" status may limit the options available to an operator, as trying to initiate a voice call to a passenger's display for a passenger who is out of their seat is ultimately a waste of resources until the passenger returns, for example. For a passenger whose status is "out of seat", an operator may configure an alert such that they are informed when the passenger returns to the seat.

As depicted, passenger D is seated with their seatbelt fastened, but passenger D requires a wellness confirmation. In such an embodiment, passenger D may have utilized their passenger display to request aid; as such, passenger D's current status of "Requires Attention" may be prioritized and highlighted visibly for the operator of passenger status HMI 800. For example, passenger D's status block may be highlighted using a different color, or may be overlayed above other display elements such that the operator must address the request for aid prior to taking any additional action.

As depicted, passenger status HMI 800 includes a plurality of available actions for a selected passenger. The available actions may include, but are not limited to, requesting that a passenger provide a wellbeing confirmation via their passenger display/communication system, initiating a video feed with the subject passenger display such that the passenger status HMI 800 displays a feed from a camera associated with the subject passenger display, initiating a voice call with a voice communication mechanism of the passenger display, sending a voice or text message to a communication mechanism of the subject passenger display, requesting that a user present their ID (either to a crew member or for display via a camera of the subject passenger display), initiating a "fasten seatbelt" request, and calling a crew member. The list of available actions may be tailored according to which passenger is selected; for example, the "fasten seatbelt" request option may be grayed out (or not presented at all) when a passenger whose seatbelt is fastened is selected. Similarly, the actions which require a passenger's presence (initiating a fasten seatbelt request, voice call, present ID, etc.) may be grayed out or otherwise not presented when a passenger is not in their seat.

In at least some embodiments, passenger status HMI may be configured to depict the following possible seat conditions: "seat not booked," "seat booked but passenger not boarded" (shortened as variants of "not boarded," for example), "seat booked, passenger boarded and seated" (shortened as "seated," for example), "seat booked, passenger boarded but identity not confirmed" (shortened as "identity not confirmed," for example), and "undesirable state detected" corresponding to a passenger indicating that they are unwell or detection otherwise that the passenger is unwell.

It should be appreciated that, while the passenger status HMI 800 is depicted with text descriptions of various current compliance conditions, in additional embodiments a passenger status HMI may be implemented wherein the statuses are reflected via defined icons or other indicators. Further, a passenger status HMI may be configurable such that certain information is minimized, removed, relocated, or otherwise de-emphasized responsive to operator preferences. Similarly, a passenger status HMI may be configurable such that certain information is added, relocated, prominently featured, focused, or otherwise emphasized responsive to operator preferences. In at least some embodiments, the passenger status HMI may be configured to display seat numbers and corresponding passenger ID/name/booking ID for the passenger who is assigned to the corresponding seat number. In general, passenger status HMI may be configurable to display information according to any user preferences with respect to the available information.

### Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Similarly, it should be appreciated that one or more of the operations of each flowchart may be combinable, replaceable, and/or otherwise altered as described herein.

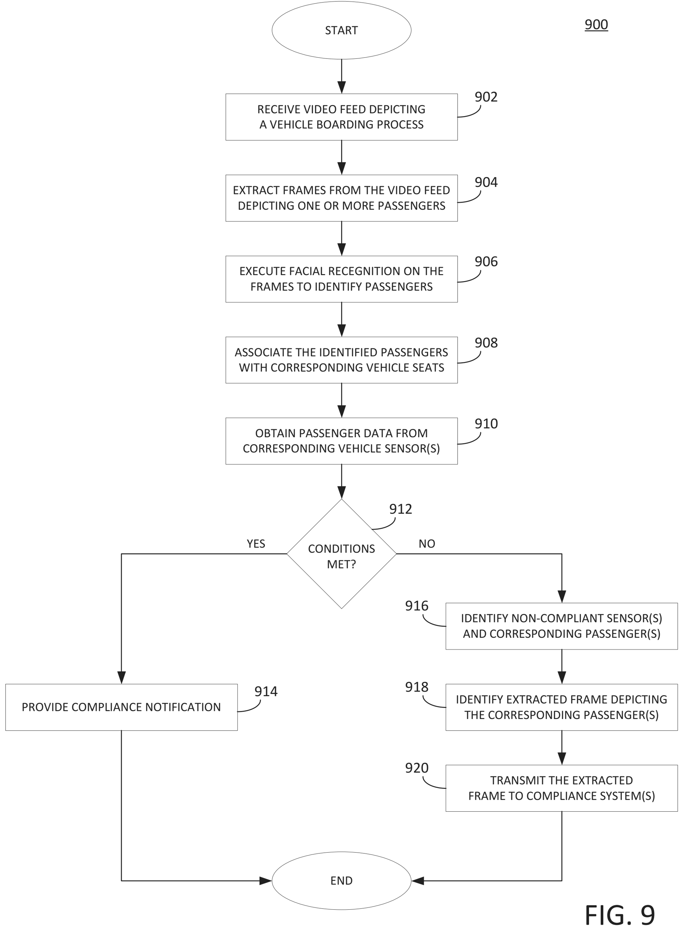

FIG. 9 illustrates a flowchart depicting operations of an example process 900 for identifying instances of failed passenger compliance in accordance with at least some example embodiments of the present disclosure. In some embodiments, the process 900 is embodied by computer program code stored on a non-transitory computer-readable storage medium of a computer program product configured for execution to perform the process as depicted and described. Additionally, or alternatively, in some embodiments, the process 900 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more vehicle management systems 102, computing devices 109A located in an operator portion of the vehicle 101, computing devices 109B located in a passenger portion of the vehicle 101, external systems 106, and/or the like to perform one or more operations of the process 900.

At operation 902, the apparatus 200 is configured to receive a video feed depicting a vehicle boarding process. In at least some embodiments, receiving a video feed depicting a vehicle boarding process includes receiving video data from one or more cameras configured to record and otherwise monitor a boarding operation corresponding to a subject vehicle. In at least some embodiments, receiving video data from one or more cameras includes receiving a single video feed depicting a boarding process in its entirety. In other embodiments, receiving video data from one or more cameras includes receiving multiple video feeds or clips corresponding to multiple segments of a boarding process. For example, the boarding process may be recorded in multiple segments corresponding to multiple boarding groups. In at least some embodiments, the apparatus 200 is additionally configured to receive a passenger listing, assigned location information, boarding information, reservation information, or any other set of information indicating passengers who have booked a seat on the subject vehicle. In such embodiments, the apparatus 200 is additionally configured to identify one or more photos corresponding to the indicated passengers. The identified one or more photos may include photo identification documents corresponding to the passengers. In at least some embodiments, such as those where the received booking information includes user profile information for one or more passengers, the identified one or more photos may correspond to profile pictures provided to a profile corresponding to a booking management entity, for example. In at least some embodiments, the apparatus is configured to establish a passenger image corpus comprising the identified one or more photos of the passengers. The image corpus may additional comprise identifying information associated with each of the identified one or more photos of the passengers.

At operation 904, the apparatus 200 is configured to extract frames from the video feed depicting one or more passengers. In some embodiments, the apparatus 200 may be configured to execute image processing techniques to identify one or more frames which depict one or more passengers clearly. For example, apparatus 200 may be configured to identify frames in which at least one passenger is facing the camera and is clearly visible (not blurry, not obstructed, etc.). In at least some embodiments, the apparatus 200 is configured to extract frames from the video feed concurrently with executing facial recognition techniques on the subject extracted frames. At operation 906, the apparatus 200 is configured to execute facial recognition techniques on the frames to identify one or more passengers. In some embodiments, apparatus 200 is configured to identify a subject of the extracted frames using image analysis techniques and execute facial recognition on the identified subject to identify a passenger corresponding to the identified subject. In such embodiments, the apparatus 200 may be configured to execute the facial recognition techniques to identify one or more passengers based at least in part on the image corpus of the passengers established using the identified photos of the passengers. The apparatus 200 may further be configured to tag the identified frames with an indicator identifying the corresponding passenger. In at least some embodiments, the apparatus 200 is further configured to store the identified frames and corresponding tags in the image corpus.

At operation 908, the apparatus 200 is configured to associate the identified one or more passengers with one or more corresponding vehicle seats. In at least some embodiments, apparatus 200 is configured to analyze a set of assigned location information to determine a plurality of passenger-seat pairings. In at least some embodiments, the set of assigned location information may include ticket information provided by an entity responsible for managing ticket sales corresponding to the vehicle. In general, the set of assigned location information may be any dataset via which a passenger's assigned seat may be determined. Associating the identified one or more passengers with one or more corresponding vehicle seats may include associating extracted frames corresponding to identified passengers to the corresponding assigned seats associated with said identified passengers.

At operation 910, the apparatus 200 is configured to obtain passenger data from one or more corresponding vehicle sensors. In at least some embodiments, obtaining passenger data from one or more corresponding vehicle sensors includes, for a representative passenger, retrieving current sensor state information for one or more sensors associated with the assigned seat of the passenger. For example, on a vehicle wherein a passenger is assigned an individual seat with a seatbelt, the subject sensors may include one or more sensors configured to detect a passenger's presence in the seat (by detecting a threshold weight on the seat, for example), one or more sensors configured to detect whether the passenger's seatbelt is engaged, and one or more sensors configured to determine whether a seat is currently configured in an upright position. The obtained passenger data may include a current state of each of these sensors.

At operation 912, the apparatus 200 is configured to determine whether a set of conditions are met with respect to the one or more corresponding vehicle sensors. In at least some embodiments, the apparatus 200 is configured to compare the obtained passenger data for one or more active seats (corresponding to seats which are ticketed to be occupied by a passenger) comply with one or more standard operating procedure conditions required to permit the vehicle to depart, liftoff, land, or otherwise operate. For example, a set of operating procedures may indicate that all seatbelts must be engaged before a vehicle can operate. In such an example, determining whether the conditions are met includes determining whether, for each occupied seat of the vehicle, the corresponding seatbelt is engaged. If it is determined that the compliance conditions are met (912, yes branch), the method continues to step 914. If it is determined that the compliance conditions are not met (912, no branch), the method continues to step 916.

At operation 914, the apparatus 200 is configured to provide a compliance notification. Providing a compliance notification may include notifying an operator that the vehicle is in compliance with the required standard operating procedures, and as such is cleared for operation. In at least some embodiments, such as those wherein one or more operating mechanisms of the vehicle are locked or otherwise disabled until a set of compliance conditions are met, providing a compliance notification may further include notifying a system responsible for managing operation of such operating mechanisms that the vehicle is cleared for operation, and therefore such mechanisms may be enabled.

At operation 916, the apparatus 200 is configured to identify one or more non-compliant sensors and one or more corresponding passengers. In at least some embodiments, identifying one or more passengers corresponding to the non-compliant sensors includes identifying a seat associated with the one or more sensors which do not meet the compliance requirements of the standard operating procedures. In at least some embodiments, identifying one or more passengers corresponding to the non-compliant sensors includes parsing the assigned location information to identify a passenger associated with the one or more non-compliant sensors.

At operation 918, the apparatus 200 is configured to identify an extracted frame depicting the one or more corresponding passengers. In at least some embodiments, identifying an extracted frame depicting the one or more corresponding passengers includes identifying one or more frames associated with the identified corresponding passenger(s). For example, identifying an extracted frame depicting the one or more corresponding passengers may include querying the image corpus for one or more frames tagged as associated with the one or more corresponding passengers.

At operation 920, the apparatus 200 is configured to transmit the extracted frame to one or more compliance systems. In at least some embodiments, the apparatus 200 transmits the extracted frame to a compliance system along with an identification of the passenger and their seat, as well as an indication of which operating procedures are not compliant with respect to the identified passenger. In at least some embodiments, the apparatus 200 is additionally configured to provide, via the compliance system(s), one or more remediation actions with respect to the non-compliant sensors. For example, the apparatus 200 may be configured to enable communication between an operator of the compliance system(s), via available voice, text, or video communication systems as enabled by a passenger device associated with the passenger's seat. In at least some embodiments, the apparatus 200 is configured to enable an operator of the compliance system to enable a reminder or automated message regarding system compliance (such as a "fasten your seatbelt" light, for example). In general, the apparatus 200 is configured to enable to select from a set of predefined actions responsive to identification of a non-compliant sensor/passenger/seat combination.

In at least some embodiments, process 900 further includes transmitting real-time video data of an operator portion and/or a passenger portion to an external/offboard operator/system. In at least some embodiments, the apparatus 200 is configured to provide the real-time video data in a compressed form. Apparatus 200 may further be configured to execute one or more image analysis techniques to generate one or more textual descriptions of the video data. In such embodiments, apparatus 200 may be configured to provide the one or more textual descriptions of the video data to the external system. In at least some embodiments, the one or more textual descriptions include a passenger name or identification, a seat identification corresponding to the passenger, a timestamp, an event category or label, an event description, and a transcription of any available voice data from the corresponding video data. In at least some embodiments, apparatus 200 may be configured to provide the one or more textual descriptions of the video data to the external system responsive to determining that a current set of network conditions would delay or otherwise impact transmission of the video data itself.

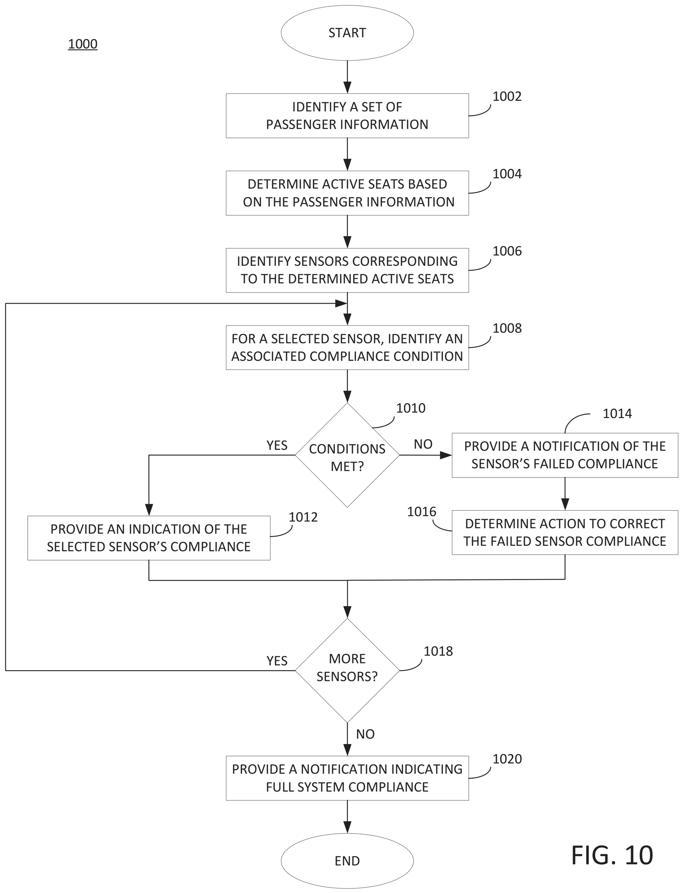

FIG. 10 illustrates a flowchart depicting operations of an example process 1000 for determining passenger compliance in accordance with at least some example embodiments of the present disclosure. In some embodiments, the process 1000 is embodied by computer program code stored on a non-transitory computer-readable storage medium of a computer program product configured for execution to perform the process as depicted and described. Additionally, or alternatively, in some embodiments, the process 1000 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more vehicle management systems 102, computing devices 105A located in an operator portion of the vehicle 101, computing devices 105B located in a passenger portion of the vehicle 101, external systems 106, and/or the like to perform one or more operations of the process 1000.

At operation 1002, the apparatus 200 is configured to identify a set of passenger information. In at least some embodiments, the apparatus 200 is configured to receive a passenger listing, assigned location information, boarding information, reservation information, or any other set of information indicating passengers who have booked a seat on the subject vehicle. In such embodiments, the apparatus 200 is additionally configured to identify one or more photos corresponding to the indicated passengers. The identified one or more photos may include photo identification documents corresponding to the passengers. In at least some embodiments, such as those where the received booking information includes user profile information for one or more passengers, the identified one or more photos may correspond to profile pictures provided to a profile corresponding to a booking management entity, for example. In at least some embodiments, the apparatus is configured to establish a passenger image corpus comprising the identified one or more photos of the passengers. The image corpus may additional comprise identifying information associated with each of the identified one or more photos of the passengers.

At operation 1004, the apparatus 200 is configured to identify active seats based on the passenger information. In at least some embodiments, the apparatus 200 is configured to determine whether any seats are intended to be empty (due to lack of a ticket purchase, for example) based on the identified set of passenger information. In general, identifying active seats based on the passenger information includes determining which seats on the subject vehicle should be occupied based on a set of booking/reservation/ticket purchase information.

At operation 1006, the apparatus 200 is configured to identify sensors corresponding to the determined active seats. In at least some embodiments, the apparatus 200 is configured to disable sensors corresponding to one or more inactive seats which are intended to be empty. In other embodiments, the sensors corresponding to one or more inactive seats are not disabled, but are removed from a list of active sensors which are queried by a compliance system with respect to a current trip for the subject vehicle. In general, identifying sensors corresponding to the determined active seats may include identifying one or more sensors associated with each seat which is expected to be occupied by a passenger based on a set of booking/reservation/ticket purchase information.

At operation 1008, the apparatus 200 is configured to identify an associated compliance condition for a selected sensor. In at least some embodiments, the apparatus 200 identifies a set of sensors monitoring one or more conditions of the determined active seats that are associated with standard operating procedure requirements for vehicle operation. In at least some embodiments, the apparatus 200 is configured to identify an acceptable condition corresponding to each of the sensor types. For example, identifying sensors corresponding to the determined active seats may include identifying sensors which monitor a seatbelt status, a passenger seating status, and a seat position status for each active seat of the vehicle. With respect to these identified sensors, the apparatus 200 may be configured to associate a first compliance condition of "active" to seatbelt sensors, a second compliance condition of "active" or "detected" to a passenger seating sensor (configured to detect a threshold amount of wait in a vehicle seat, for example), and a third compliance condition of "upright" or "default" with respect to the seat position sensors.

At operation 1010, the apparatus 200 is configured to determine whether one or more subject conditions are met corresponding to the selected sensor. In at least some embodiments, the apparatus 200 is configured to compare a current status of the selected sensor to an acceptable status for such a sensor type as indicated by the standard operating procedures. If the subject sensor is determined to be compliant with the subject conditions (1010, yes branch), the method continues to operation 1012. If the subject sensor is determined to not be compliant with the subject conditions (1010, no branch), the method continues to operation 1014.

At operation 1012, the apparatus 200 is configured to provide a notification indicating the selected sensor's compliance. In at least some embodiments, providing an indication of the selected sensor's compliance includes updating a checklist reflecting each required sensor's compliance status to indicate that the subject sensor is compliant as of a most recent compliance check. Such a checklist may be visible to an operator of the vehicle and/or an operator at an off-vehicle location, such as a ground control facility, and may show real-time indications corresponding to passenger and sensor compliance.

At operation 1014, the apparatus 200 is configured to provide a notification of the sensor's failed compliance. In at least some embodiments, providing an indication of the selected sensor's failed compliance includes updating a checklist reflecting each required sensor's compliance status to indicate that the subject sensor is not-compliant as of a most recent compliance check. Such a compliance checklist may be visible to an operator of the vehicle and/or an operator at an off-vehicle location, such as a ground control facility, and may show real-time indications corresponding to passenger and sensor compliance.

At operation 1016, the apparatus 200 is configured to determine a corrective action corresponding to the sensor's failed compliance. For example, the determined corrective actions corresponding to the sensor's failed compliance may include, but are not limited to, requesting that a passenger provide a wellbeing confirmation via their passenger display/communication system, initiating a video feed with the subject passenger display, initiating a voice call with a voice communication mechanism of the passenger display, sending a voice or text message to a communication mechanism of the subject passenger display, requesting that a user present their ID (either to a crew member or for display via a camera of the subject passenger display), initiating a "fasten seatbelt" request, and calling a crew member. The list of available actions may be tailored according to which sensor is selected; for example, the "fasten seatbelt" request option may be grayed out (or not presented at all) when a passenger whose seatbelt is fastened is selected. Similarly, the actions which require a passenger's presence (initiating a fasten seatbelt request, voice call, present ID, etc.) may be grayed out or otherwise not presented when a passenger is not in their seat. In at least some embodiments, a compliance checklist as previously described may additionally be configured to provide one or more interactable options corresponding to the determined corrective action(s). In at least some embodiments, the determined corrective action(s) may be added to a checklist such that the further validation according to the checklist includes confirming whether any required corrective action has been taken. In embodiments wherein the compliance status has been corrected independent of the corrective action, the apparatus 200 may be configured to remove the corrective action from the checklist responsive to the determination of the compliant status.

At operation 1018, the apparatus 200 is configured to determine whether there are additional sensors remaining. If there are one or more remaining sensors whose compliance have not been checked (1018, yes branch), the method returns to step 1008. If there are no remaining sensors whose compliance have not been verified (1018, no branch), the method continues to step 1020.

At operation 1020, the apparatus 200 is configured to provide a notification indicating full system compliance. Apparatus 200 may further be configured to notify an operator of the vehicle and/or one or more additional crew members or ground operators that the vehicle is fully compliant for operation.

While the embodiments as described herein describe sensors configured for seatbelt monitoring, seat position monitoring, seat occupancy monitoring, and the like, it should be appreciated that sensors for any number of vehicle conditions can be utilized and subjected to compliance verification as described. For example, sensor condition checks may be implemented as described herein with respect to sensors for detecting: pilot incapacitation, outstanding pilot or passenger queries/inquiries, open window shields, proper luggage storage, passenger incapacitation, outstanding reported passenger concerns (reported via a passenger display system, for example), passengers entering restricted areas (such as a cockpit/operating chamber), passengers attempting to remain in cabin after de-boarding.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving a video feed of a plurality of passengers boarding a vehicle;
executing facial recognition with respect to one or more captured frames of the video feed to identify one or more passengers of the plurality of passengers;
associating the identified one or more passengers with one or more vehicle seats based on a set of assigned location information;
obtaining passenger data for the vehicle from one or more sensors for one or more corresponding passengers, wherein the passenger data indicates current state information corresponding to the one or more sensors;
determining whether the passenger data satisfies at least one adherence condition stored in a data store;
identifying at least one sensor which does not comply with the at least one adherence condition and a corresponding passenger associated with the at least one sensor based on the set of assigned location information; and
transmitting a subject frame of the one or more captured frames of the video feed to one or more vehicle staff on board or at an offboard control location, wherein the subject frame of the one or more captured frames depicts the corresponding passenger associated with the at least one sensor.

2. The computer-implemented method of claim 1, wherein transmitting instructions for the corresponding passenger further comprises displaying, via a passenger display subsystem corresponding to the at least one sensor, the instructions for the corresponding passenger.

3. The computer-implemented method of claim 1, wherein transmitting instructions for the corresponding passenger further comprises delivering an aural alert to a system associated with the corresponding passenger.

4. The computer-implemented method of claim 1, further comprising:
generating current compliance data based on the passenger data and the at least one adherence condition; and
transmitting the current compliance data to a ground operator.

5. The computer-implemented method of claim 1, further comprising:
generating a compliance checklist based, at least in part, on the at least one sensor which does not comply with the at least one adherence condition, wherein the compliance checklist includes one or more actions to be completed to meet the at least one adherence condition.

6. The computer-implemented method of claim 5, further comprising:
detecting one or more incomplete actions corresponding to the compliance checklist; and
blocking one or more vehicle actions responsive to detecting the one or more incomplete actions.

7. The computer-implemented method of claim 1, wherein:
(i) the passenger data indicates, for a subject sensor of the one or more sensors, whether the subject sensor is in an active state, an inactive state, or an invalid state, and
(ii) the at least one adherence condition indicates a required state associated with a first subset of the one or more sensors, wherein the first subset corresponds to a first passenger condition.

8. The computer-implemented method of claim 1, further comprising:
receiving a compliance query from a passenger of the vehicle;
generating an automated response to the compliance query; and
transmitting the automated response to a corresponding passenger system.

9. The computer-implemented method of claim 1, further comprising:
presenting one or more interaction options, via a passenger system, enabling a passenger to submit one or more free-text messages to an offboard staff member,

10. The computer-implemented method of claim 1, further comprising:
generating one or more textual descriptions corresponding to the video feed; and
transmitting the one or more textual descriptions to the one or more vehicle staff.

11. An apparatus comprising at least one processor and at least one non-transitory memory having computer-coded instructions stored thereon that, in execution with at least one processor, cause the apparatus to:
receive a video feed of a plurality of passengers boarding a vehicle;
execute facial recognition with respect to one or more captured frames of the video feed to identify one or more passengers of the plurality of passengers;
associate the identified one or more passengers with one or more vehicle seats based on a set of assigned location information;
obtain passenger data for the vehicle from one or more sensors for one or more corresponding passengers, wherein the passenger data indicates current state information corresponding to the one or more sensors;
determine whether the passenger data satisfies at least one adherence condition stored in a data store;
identify at least one sensor which does not comply with the at least one adherence condition and a corresponding passenger associated with the at least one sensor based on the set of assigned location information; and
transmit a subject frame of the one or more captured frames of the video feed to one or more vehicle staff on board or at an offboard control location, wherein the subject frame of the one or more captured frames depicts the corresponding passenger associated with the at least one sensor.

12. The apparatus of claim 11, wherein:
the computer-coded instructions, in execution with the at least one processor, further cause the apparatus to:
generate current compliance data based on the passenger data and the at least one adherence condition; and
transmit the current compliance data to a ground operator.

13. The apparatus of claim 11, wherein:
the computer-coded instructions, in execution with the at least one processor, further cause the apparatus to:
generate a compliance checklist based, at least in part, on the at least one sensor which does not comply with the at least one adherence condition, wherein the compliance checklist includes one or more actions to be completed to meet the at least one adherence condition.

14. The apparatus of claim 13, wherein:
the computer-coded instructions, in execution with the at least one processor, further cause the apparatus to:
detect one or more incomplete actions corresponding to the compliance checklist; and
block one or more vehicle actions responsive to detecting the one or more incomplete actions.

15. A computer program product comprising at least one non-transitory computer-readable storage medium having computer program code stored thereon that, in execution with at least one processor, is configured to execute operations comprising:
receiving a video feed of a plurality of passengers boarding a vehicle;
executing facial recognition with respect to one or more captured frames of the video feed to identify one or more passengers of the plurality of passengers;
associating the identified one or more passengers with one or more vehicle seats based on a set of assigned location information;
obtaining passenger data for the vehicle from one or more sensors for one or more corresponding passengers, wherein the passenger data indicates current state information corresponding to the one or more sensors;
determining whether the passenger data satisfies at least one adherence condition stored in a data store;
identifying at least one sensor which does not comply with the at least one adherence condition and a corresponding passenger associated with the at least one sensor based on the set of assigned location information; and
transmitting a subject frame of the one or more captured frames of the video feed to one or more vehicle staff on board or at an offboard control location, wherein the subject frame of the one or more captured frames depicts the corresponding passenger associated with the at least one sensor.
